# EUROPEAN PATENT SPECIFICATION

(11) **EP 4 160 309 B1**
(45) Date of publication and mention of the grant of the patent: **22.07.2026**
(21) Application number: 21812625.8
(22) Date of filing: 26.02.2021
(51) Int. Cl.: G06F 3/03, G06F 3/0346, G06F 3/0481, G03B 17/56

(54) **INPUT DEVICE**
EINGABEGERÄT
DISPOSITIF D'ENTRÉE

(30) Priority: 29.05.2020 JP 2020094853
(43) Date of publication of application: 05.04.2023
(73) Proprietor: Sony Interactive Entertainment Inc., Tokyo 108-0075 (JP)
(72) Inventor: NOKUO, Taichi, Tokyo 108-0075 (JP); NISHIKAWA, Kenzo, Tokyo 108-0075 (JP); IGARASHI, Takeshi, Tokyo 108-0075 (JP)
(74) Representative: Fish & Richardson P.C.
(86) International application number: PCT/JP2021/007459
(87) International publication number: WO 2021/240930

(56) References cited:
- WO-A1-2019/181118
- JP-A- 2017 099 608
- US-A1- 2016 364 910
- US-A1- 2017 131 767
- US-A1- 2018 329 484
- US-A1- 2019 384 419
- US-B1- 10 409 392

## Description

### [Technical Field]

The present disclosure relates to an input device including a tracked section, in combination with a head-mounted display that includes a camera.

### [Background Art]

There is a technology that provides a light-emitting section on an input device and detects the light-emitting section by a camera to track the position and posture of the input device. PTL 1 described below discloses an input device for game operation that is provided with a spherical light-emitting section. The input device of PTL 1 is captured by a camera installed on a television, for example, and the position and posture of the input device is calculated from the video.

### [Citation List]

### [Patent Literature]

[PTL 1] Japanese Patent Laid-open No. 2011-164932
US 2018/ 329 484 A1 discloses an input device with a bar-like grip section and a distal ring that bears the light-emitting section.
US 2017/ 131 767 A1 teaches a pair of handheld controllers with asymmetric tracking patterns for use with a stationary tracking camera.
US 10 409 392 B1 relates to a hand-held controller that includes a handle, a ring attached to an end of the handle and light emitting diodes.
From US 2016/ 364 910 A1, a system with a head-mounted display and a hand-held controller is known, the latter being held in a manner that light-emitting diodes are located in a section that faces away from the head-mounted display.

US 2019/384419 A1 discloses a handheld controller including a handle and a support. The handle includes an input device for detecting an input operation of a user. In one embodiment, the support is coupled to a lower portion of the handle. The support includes an exterior surface with a passive identification pattern for tracking of the handheld controller.

### [Summary]

### [Technical Problem]

In a system such as the one in PTL 1, it is important that a light-emitting section be visible to a camera installed on a television, without being covered by the hand or arm of a user. Further, there has been considered a system in which, unlike that in PTL 1, a camera configured to capture an input device is mounted on a head-mounted display and the position and posture of the input device are calculated from video obtained by the camera. In this system, a moving image (for example, a game image) based on the position and posture of the input device is provided to a user through the head-mounted display.

### [Solution to Problem]

The problems with prior art systems are solved by the subject-matter of the independent claim.

An example of an input device proposed in the present disclosure includes a main body including a grip and at least one operation member that a user operates with his/her finger, a tracked region in which a plurality of light-emitting sections are arranged, a first section that is located on a rear side of the at least one operation member in side view and that forms part of the tracked region, and a second section that is located on a front side of the first section, that extends in a direction different from that of the first section, and that forms another part of the tracked region. With this structure, the detection stability of a camera regarding the light-emitting sections can be achieved.

Another example of the input device proposed in the present disclosure includes a tracked region in which a plurality of light-emitting sections are provided. The tracked region has a first curved surface that is located on a rear portion of the input device and that forms part of an exterior surface of the input device, and a second curved surface that is located on a front portion of the input device and that forms another part of the exterior surface of the input device. The first curved surface and the second curved surface form part of a single spherical surface. With this structure, the calculation of the position and posture of the input device based on the detected positions of the light-emitting sections can be simplified.

Still another example of the input device proposed in the present disclosure includes a tracked region in which a plurality of light-emitting sections are provided. The tracked region includes a first region which forms part of an exterior surface of the input device and in which the plurality of light-emitting sections are arranged, and a second region which forms another part of the exterior surface of the input device and in which the plurality of light-emitting sections are arranged. The plurality of light-emitting sections arranged in the first region and the plurality of light-emitting sections arranged in the second region are located on a single virtual spherical surface. With this structure, the calculation of the position and posture of the input device based on the detected positions of the light-emitting sections can be simplified.

Yet another example of the input device proposed in the present disclosure includes a main body including a grip and at least one operation member that a user operates with his/her finger, a rear section that is located on a rear side of the at least one operation member and that covers at least an upper side of the grip in rear view, a tracked region including a first region in which a plurality of light-emitting sections are arranged and a second region in which a plurality of light-emitting sections are arranged, and a beam section for connecting an upper portion of the main body and the rear section to each other. The first region is provided on the rear section, and at least part of the second region is provided on the main body. With this structure, it can be prevented that the relative positions of the first region and the second region are changed, so that the calculation accuracy for the position and posture of the input device can be enhanced.

### [Brief Description of Drawings]

[FIG. 1]

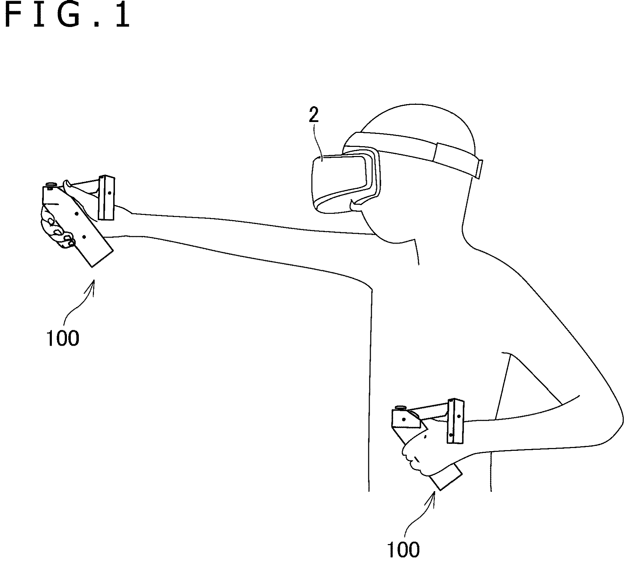

   FIG. 1 is a view illustrating an exemplary system in which an input device proposed in the present disclosure is used.
[FIG. 2]

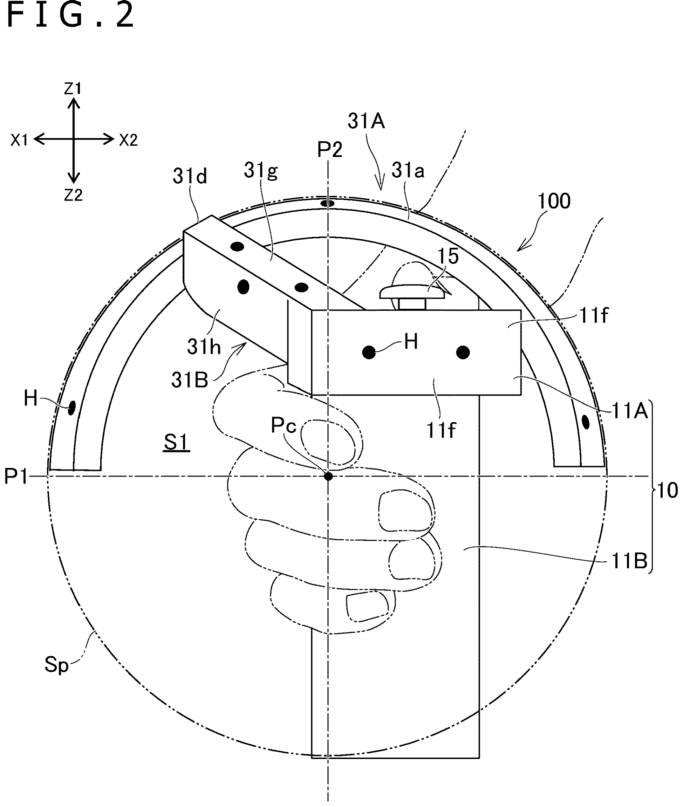

   FIG. 2 is a front view illustrating a first example of the input device proposed in the present disclosure.
[FIG. 3]

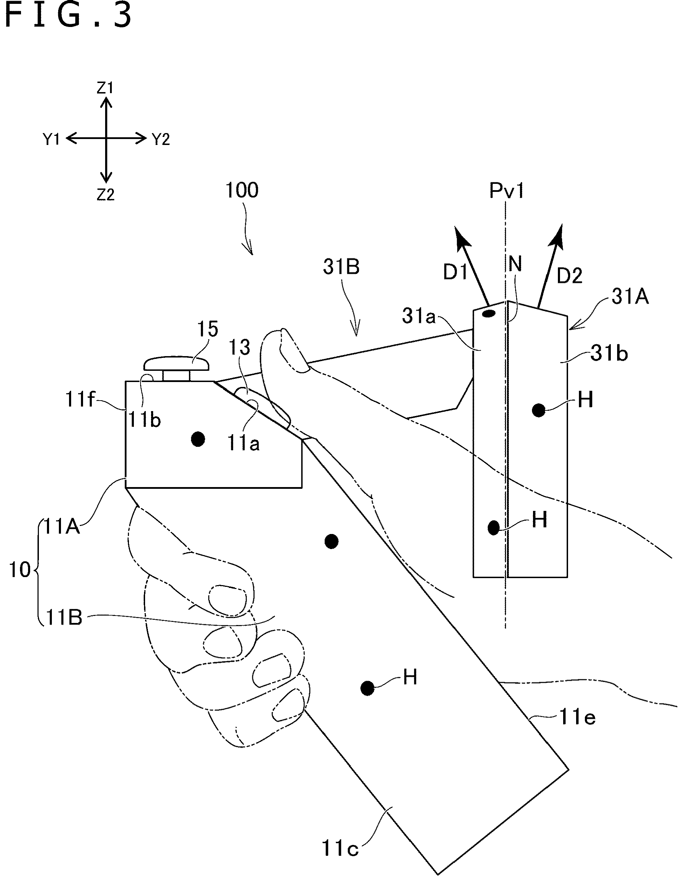

   FIG. 3 is a left-side view of the input device illustrated in FIG. 2.
[FIG. 4]

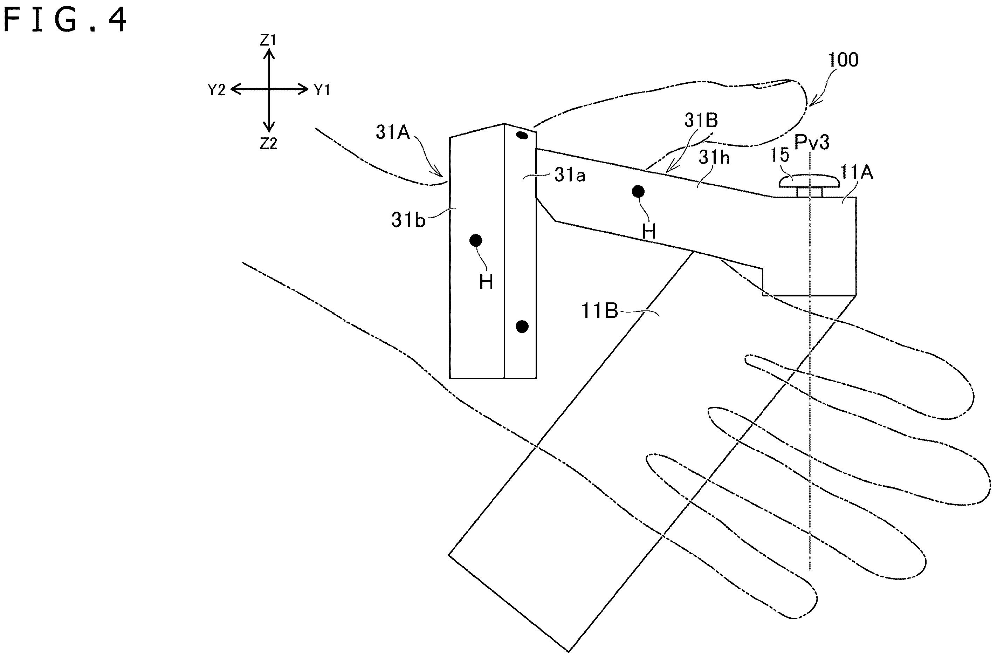

   FIG. 4 is a right-side view of the input device illustrated in FIG. 2.
[FIG. 5]

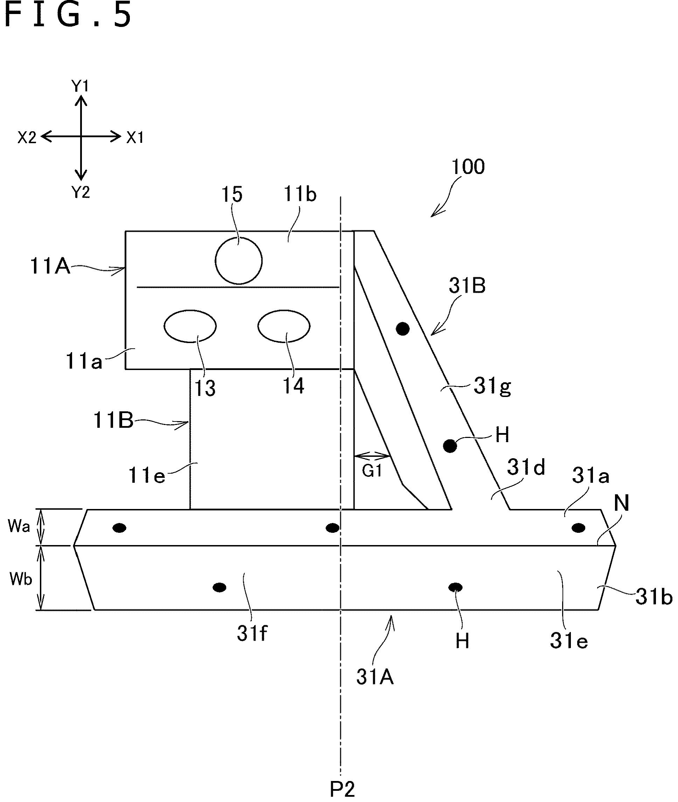

   FIG. 5 is a plan view of the input device illustrated in FIG. 2.
[FIG. 6]

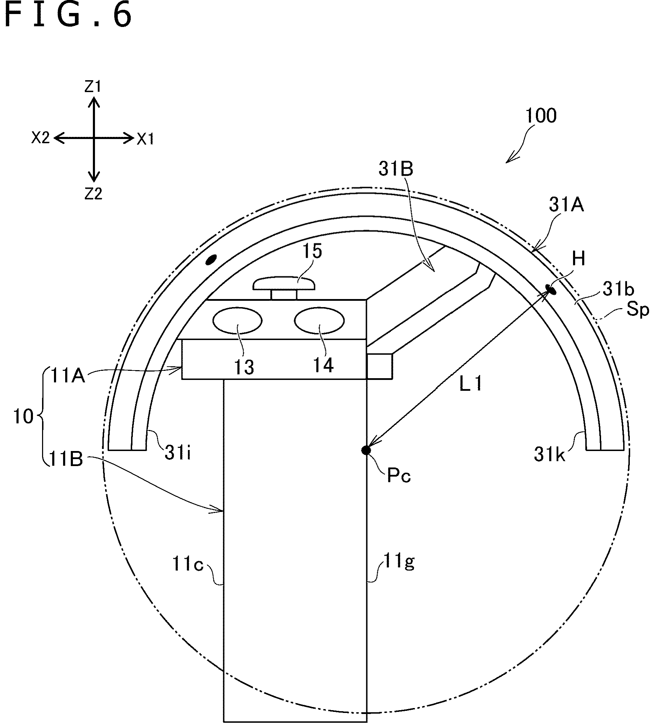

   FIG. 6 is a rear view of the input device illustrated in FIG. 2.
[FIG. 7]

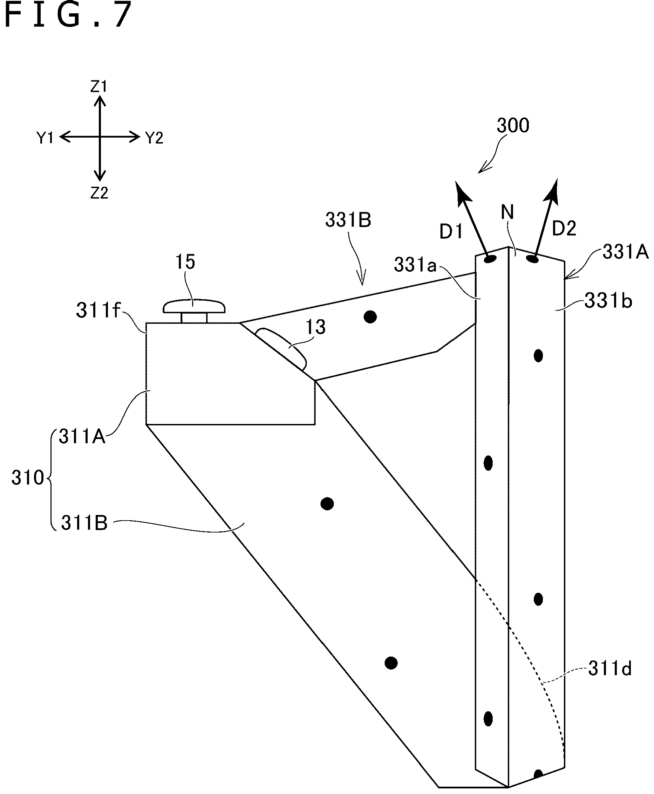

   FIG. 7 is a left-side view illustrating a second example of the input device proposed in the present disclosure.
[FIG. 8]

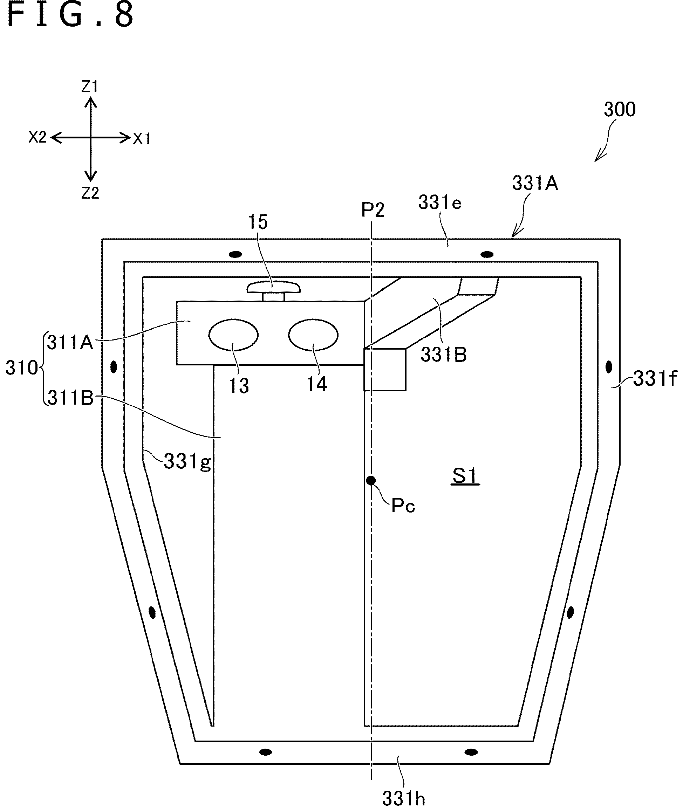

   FIG. 8 is a rear view of the input device illustrated in FIG. 7.
[FIG. 9]

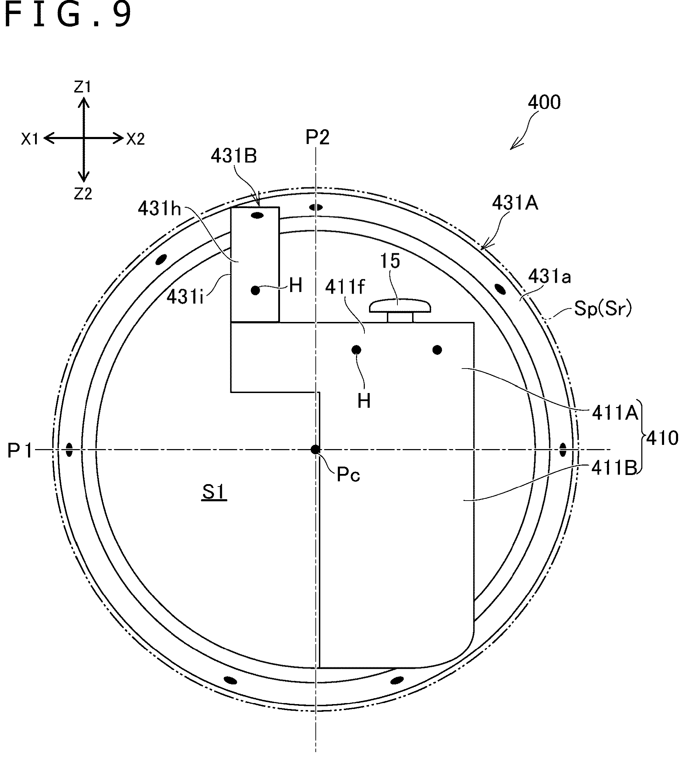

   FIG. 9 is a front view illustrating a third example of the input device proposed in the present disclosure.
[FIG. 10]

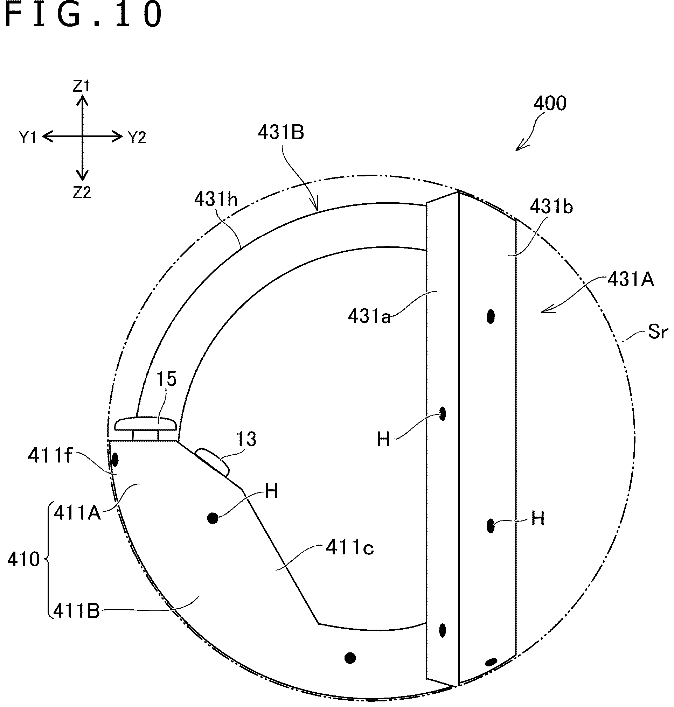

   FIG. 10 is a left-side view of the input device illustrated in FIG. 9.
[FIG. 11]

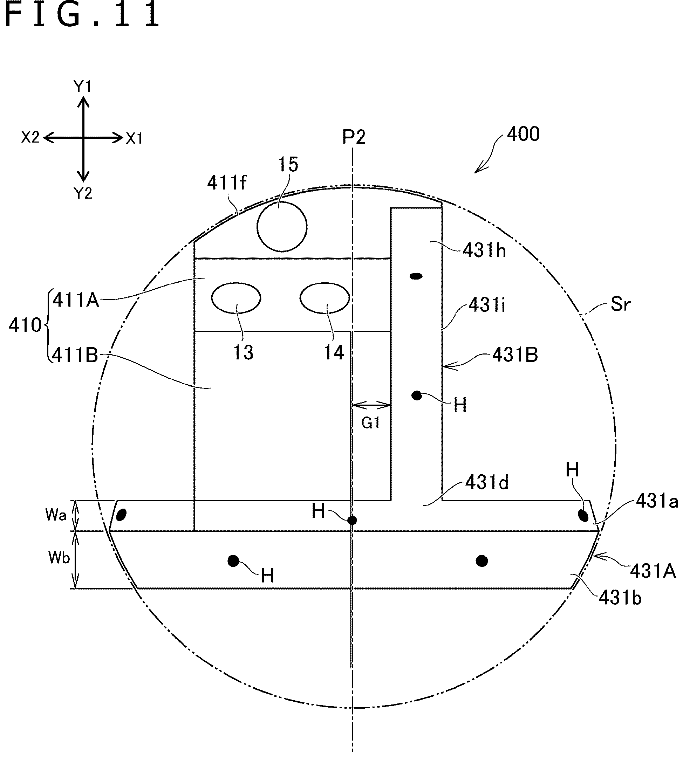

   FIG. 11 is a plan view of the input device illustrated in FIG. 9.
[FIG. 12]

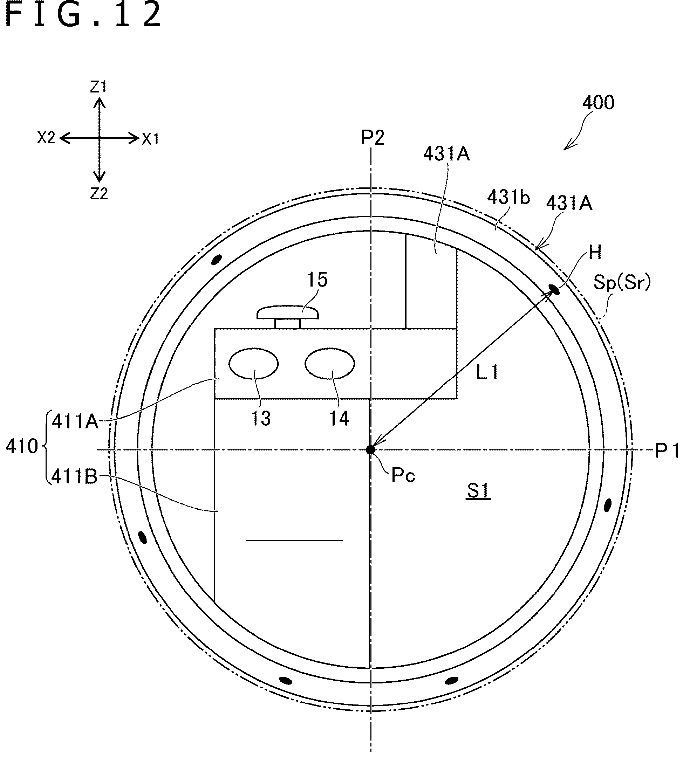

   FIG. 12 is a rear view of the input device illustrated in FIG. 9.
[FIG. 13]

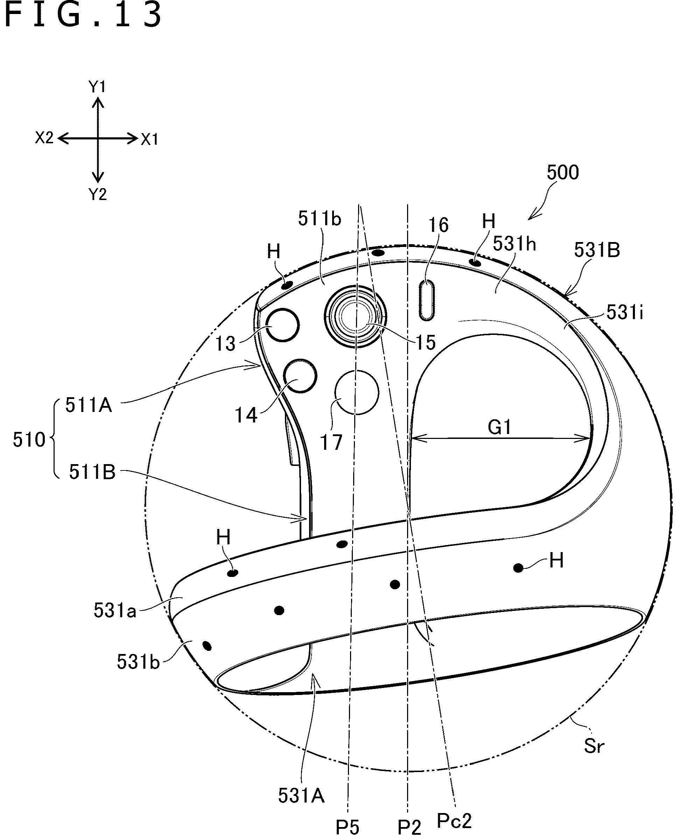

   FIG. 13 is a plan view illustrating a fourth example of the input device proposed in the present disclosure.
[FIG. 14]

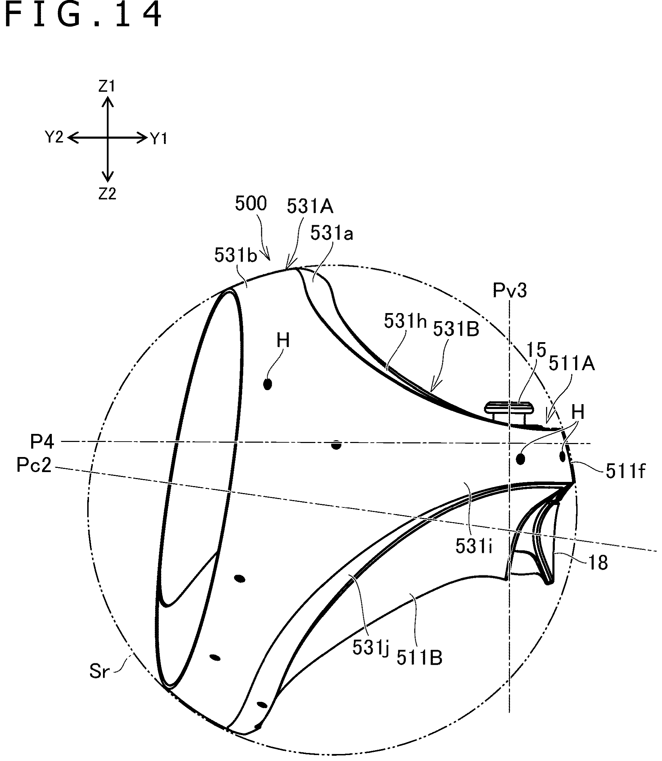

   FIG. 14 is a right-side view of the input device illustrated in FIG. 13.
[FIG. 15]

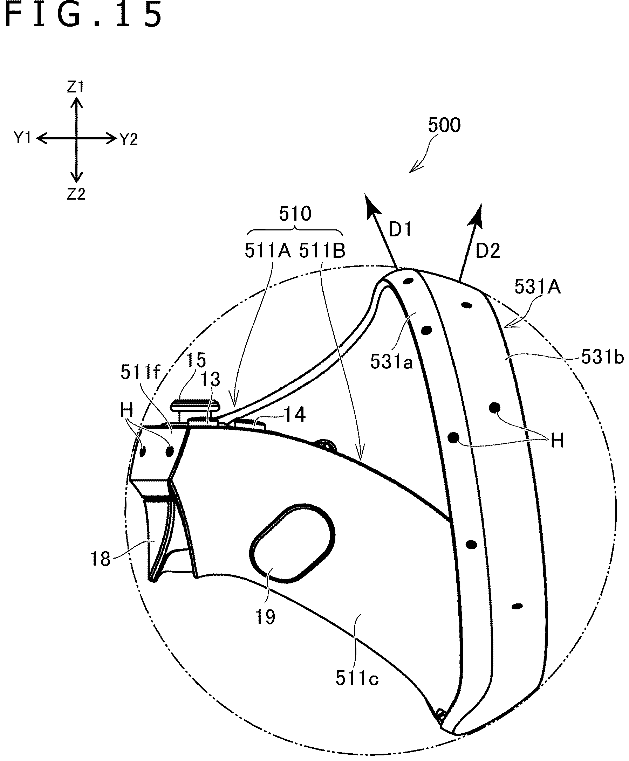

   FIG. 15 is a left-side view of the input device illustrated in FIG. 13.
[FIG. 16]

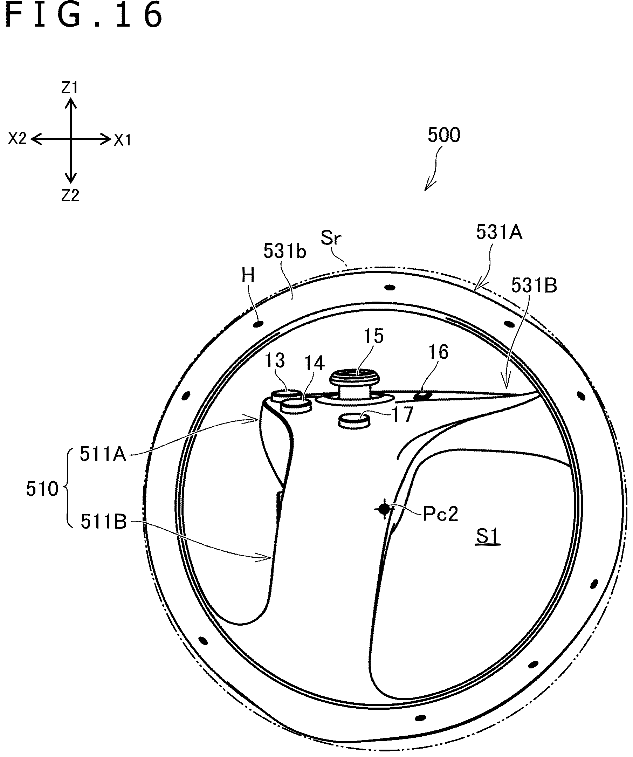

   FIG. 16 is a view of the input device illustrated in FIG. 13, in which the input device faces a direction indicated by a center line Pc illustrated in FIG. 13.
[FIG. 17]

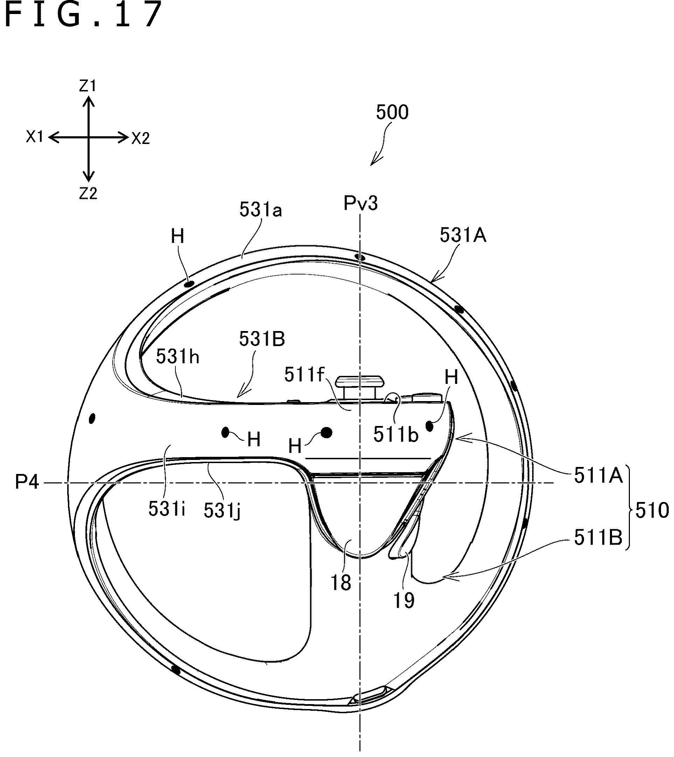

   FIG. 17 is a front view of the input device illustrated in FIG. 13.
[FIG. 18]

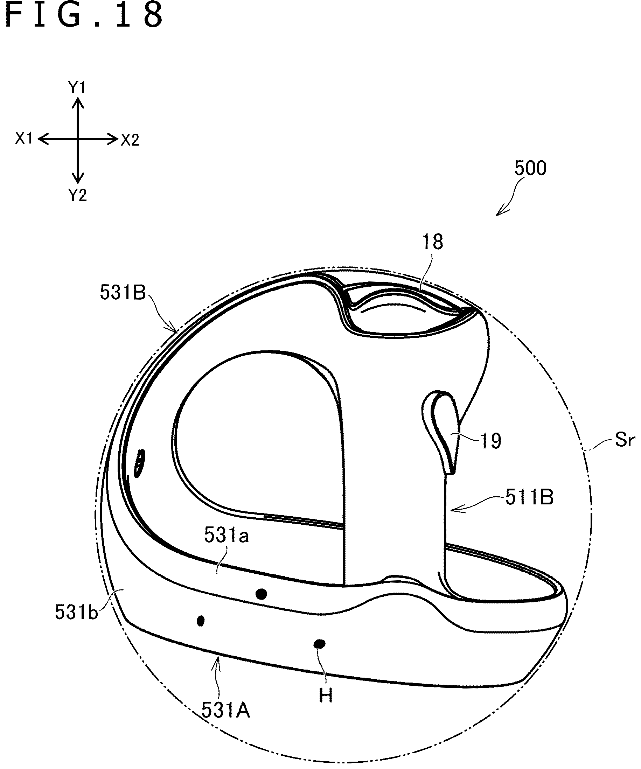

   FIG. 18 is a bottom view of the input device illustrated in FIG. 13.
[FIG. 19]

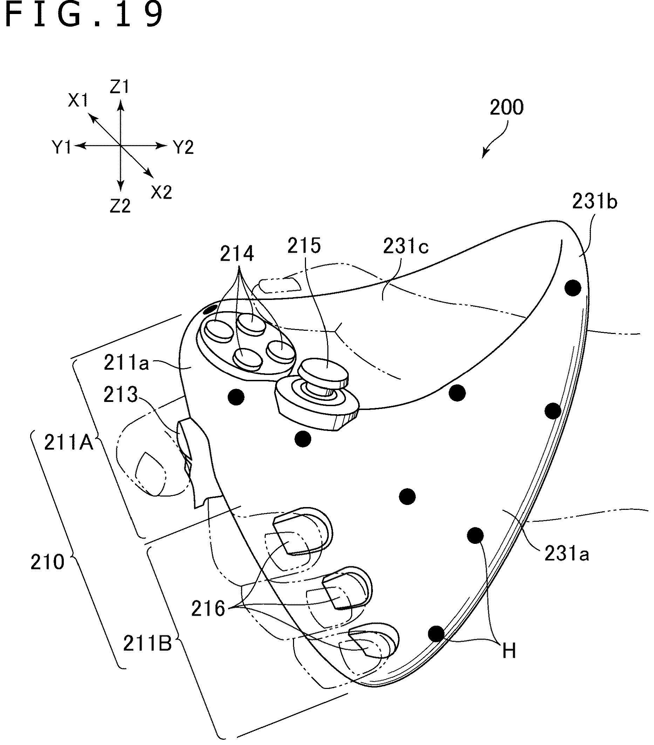

   FIG. 19 is a perspective view illustrating a fifth example of the input device proposed in the present disclosure.
[FIG. 20]

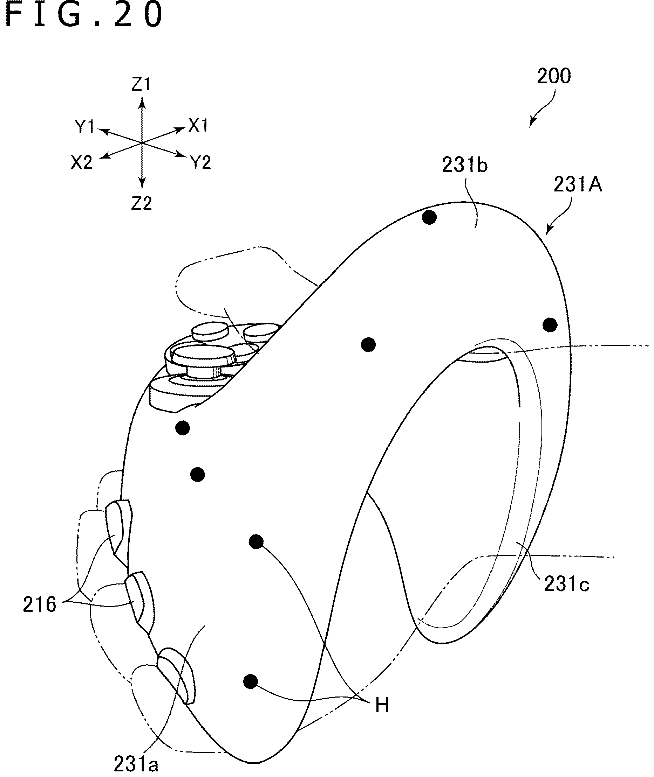

   FIG. 20 is a perspective view of the input device illustrated in FIG. 19.
[FIG. 21]

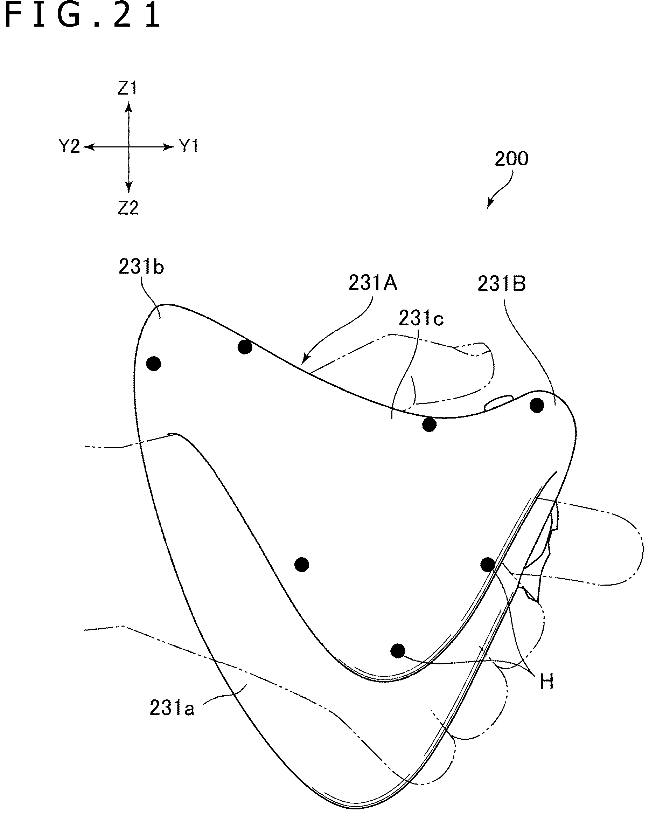

   FIG. 21 is a side view of the input device illustrated in FIG. 19.
[FIG. 22]

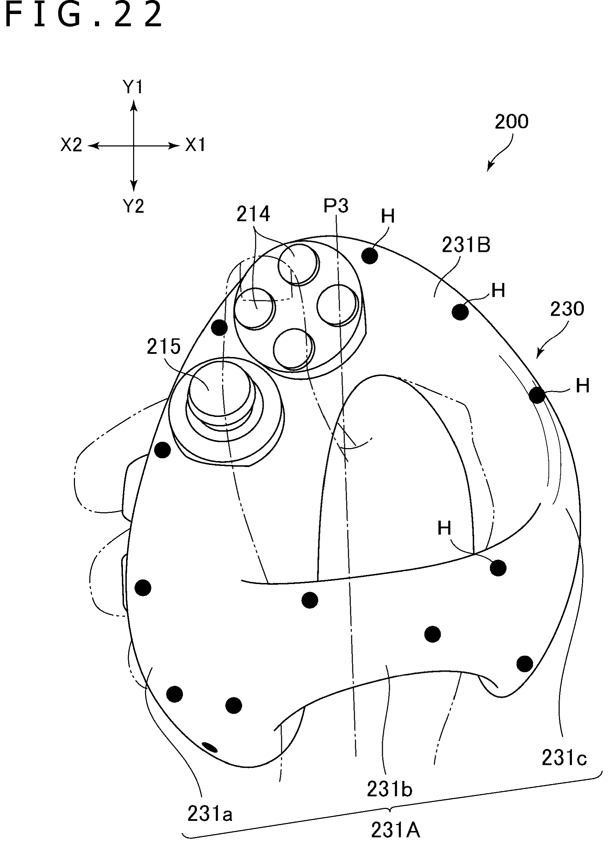

   FIG. 22 is a plan view of the input device illustrated in FIG. 19.
[FIG. 23]

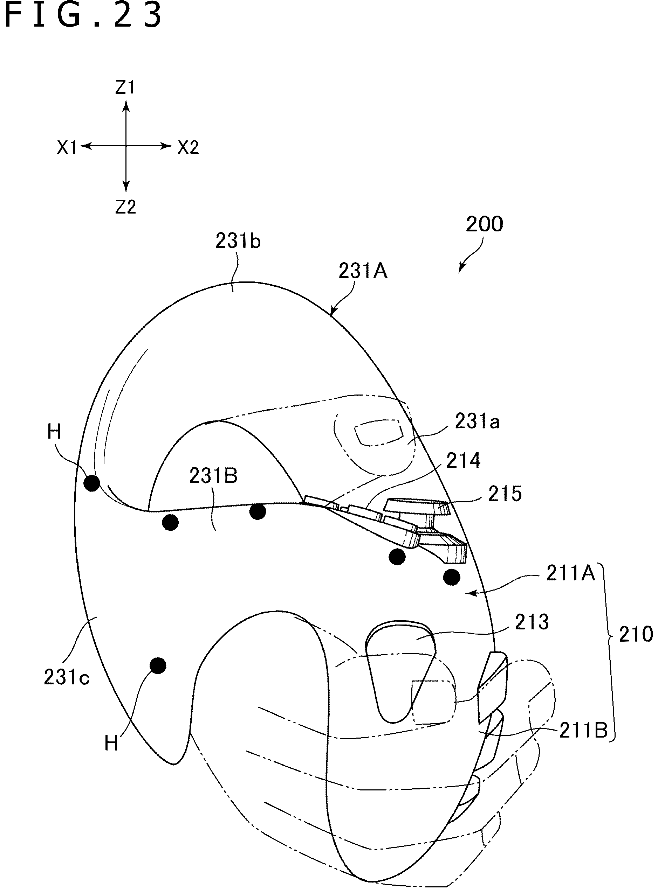

   FIG. 23 is a front view of the input device illustrated in FIG. 19.

### [Description of Embodiments]

Now, examples of an input device proposed in the present disclosure are described. Herein, directions denoted by Z1 and Z2 in FIG. 2 are referred to as an "upper direction" and a "lower direction," respectively, directions denoted by Y1 and Y2 in FIG. 3 are referred to as a "front direction" and a "rear direction," respectively, and directions denoted by X1 and X2 in FIG. 2 are referred to as a "right direction" and a "left direction," respectively. Those directions correspond to directions viewed from a user when the user is gripping and using an input device 100 as illustrated in FIG. 1. Further, in FIG. 2 to FIG. 23, the black circles represent light-emitting sections H described later.

### [Overview of System]

As illustrated in FIG. 1, the input device 100 is used together with a head-mounted display (HMD) 2. The user wears the HMD 2 on his/her head and holds the input device 100 in his/her right hand and/or left hand. The HMD 2 includes a camera facing forward. The input device 100 is provided with the plurality of light-emitting sections H described later. The positions of the light-emitting sections H are detected through the camera. The position and posture of the input device 100 (that is, the position and orientation of the hand of the user) are calculated in reference to the positions of the light-emitting sections. The input device 100 includes a plurality of operation members (for example, operation buttons, an operation stick, or a touch sensor) that the user operates with his/her fingers as described later. The display section of the HMD 2 displays a moving image (for example, a game image) generated according to the position of the input device 100, the posture thereof, an operation made on the operation members, or the like.

The position and posture of the input device 100 may be calculated by an information processing apparatus installed on the HMD 2 or by an external information processing apparatus (for example, a game apparatus independent of the HMD 2 or a personal computer). The input device 100 may include a motion sensor (for example, an acceleration sensor or a gyroscope sensor). The information processing apparatus may calculate the position and posture of the input device 100 in reference to not only the positions of the light-emitting sections H but also output from the motion sensor. Further, a moving image may be generated by the information processing apparatus installed on the HMD 2 or by an external information processing apparatus. In a case where the external information processing apparatus calculates the position and the like of the input device 100 and generates a moving image, image information acquired by the camera is sent to the external information processing apparatus in a wireless or wired manner. Generated moving image information is sent from the external information processing apparatus to the HMD 2 in a wireless or wired manner.

Note that, the input device 100 may include a microphone, a speaker, or the like. Moreover, the input device 100 may include, on its exterior surface, a light-emitting section that is not used for position and posture tracking, for example, a light-emitting section that indicates the operating state of the input device 100 or a light-emitting section for identification between the plurality of input devices 100.

### [Overall Configuration of Input Device]

In the following description, the input device 100 for the right hand is described in detail. The outer shape of the input device 100 for the right hand and the outer shape of the input device 100 for the left hand are symmetrical.

Accordingly, the description of the relative positions of the elements (members or parts) of the input device 100 is also applicable to the input device 100 for the left hand by reversing the terms "rightward," "right side," "leftward," and "left side" used in the description. The left and right input devices 100 may be different from each other in number or type of operation members that the user operates with his/her fingers. Further, the input device 100 for the right hand and the input device 100 for the left hand are not necessarily required to be symmetrical in terms of the placement of the operation members.

As illustrated in FIG. 3, a main body 10 of the input device 100 includes a grip 11B and an operation section 11A on which the plurality of operation members are placed. The main body 10 includes the operation section 11A on its upper portion, and the grip 11B extends downward from the operation section 11A. Specifically, the grip 11B extends obliquely downward and rearward from the operation section 11A. The operation members placed on the operation section 11A can be operated with the thumb with the grip 11B gripped. The grip 11B is held with the ball of the thumb, the middle finger, the ring finger, and the little finger, for example. An operation member (button) that is to be operated with the index finger may be provided on a front surface 11f of the operation section 11A and/or the front surface of the grip 11B.

As illustrated in FIG. 3, for example, operation buttons 13 and 14 and an operation stick 15 are placed on the operation section 11A as the operation members. The operation buttons 13 and 14 are placed on a first upper surface 11a facing in the rear and upper directions of the operation section 11A and are operated with the thumb, for example. The operation stick 15 is placed on a second upper surface 11b of the operation section 11A and is operated with the thumb, for example. The second upper surface 11b is a surface that is located on the front side of the first upper surface 11a and that faces upward. The operation stick 15 is an operation member that is tiltable and slidable in the radial direction.

The operation members provided on the operation section 11A are not limited to the example described here. For example, a touch sensor, a trigger button, or a touch-sensor-equipped button may be provided on the operation section 11A. Further, the number of operation members provided on the operation section 11A may be one, two, or four or more. For example, a plurality of operation buttons may be provided on the second upper surface 11b. In the following description, the operation buttons 13 and 14 and the operation stick 15 are referred to as the "operation members 13, 14, and 15."

The input device 100 includes, on its exterior surface, a tracked region in which the plurality of light-emitting sections H are provided. Light-emitting elements (specifically, light-emitting diodes (LEDs)) are provided at locations corresponding to the light-emitting sections H in the tracked region. The exterior surface of the input device 100 is formed of an exterior member covering the LEDs, for example. The LEDs are placed away from the inner surface of the exterior member. Light from the LEDs may be guided through a light-guiding member to the exterior member (light-emitting sections H). Note that the "light-emitting section H" is a portion through which light passes in the exterior member. In a structure in which the exterior member is formed of an opaque material and transparent materials or holes through which light passes are formed at the locations of the light-emitting elements, a portion in which the transparent material or the hole through which light passes is formed serves as the light-emitting section H. On the other hand, in a structure in which a transparent exterior member is placed on the outermost surface of the input device 100 and the light-emitting elements (LEDs) are placed on the inner side of the exterior member, a portion facing the light-emitting element serves as the light-emitting section H. Further, in a structure in which a transparent exterior member is placed on the outermost surface of the input device 100, a light-guiding member is placed on the inner side of the exterior member, and light from the light-emitting elements is guided by the light-guiding member, a portion facing the end surface (light exit surface) of the light-guiding member serves as the light-emitting section H.

As illustrated in FIG. 3 and FIG. 5, the input device 100 includes a rear tracked section 31A and a front tracked section 31B. The rear tracked section 31A and the front tracked section 31B are each provided with the plurality of light-emitting sections H. The exterior surfaces of the tracked sections 31A and 31B form the tracked region. The input device 100 has no tracked section located on the front side of the front surface 11f of the operation section 11A.

The main body 10 including the operation section 11A and the grip 11B may also be provided with the light-emitting sections H. That is, part of the exterior surface of the main body 10 may also form the tracked region. In the example of the input device 100, the grip 11B has a relatively large width, and hence, a left side surface 11c of the main body 10 is not covered by the hand of the user when the user is gripping the grip 11B in his/her right hand as illustrated in FIG. 2. Hence, the left side surface 11c may be provided with the plurality of light-emitting sections H. Further, the front surface 11f (see FIG. 1) of the operation section 11A may also be provided with the plurality of light-emitting sections H. The other regions of the exterior surface of the main body 10, for example, the rear and front surfaces of the grip 11B, are not provided with the light-emitting sections H.

### [Position of Rear Tracked Section]

As illustrated in FIG. 3, the rear tracked section 31A is located on the rear side of the operation members placed on the operation section 11A. In the example of the input device 100, the rear tracked section 31A is located on the rear side of all the operation members 13, 14, and 15 placed on the operation section 11A. With the rear tracked section 31A placed in this way, for example, as compared to a structure in which a tracked section is located on the front side of the operation section 11A, a moment that acts on the input device 100 when the input device 100 is waved can be reduced, and a burden on the wrist or arm of the user can thereby be reduced.

In the side view of the input device 100, the grip 11B is inclined forward relative to the rear tracked section 31A. The rear tracked section 31A is located on the rear side of the front portion of the grip 11B. The position of the rear tracked section 31A in the front-rear direction is matched with the position of the rear end of the grip 11B. The rear end of the grip 11B is located under the rear tracked section 31A. With this positional relation between the grip 11B and the rear tracked section 31A, the rear tracked section 31A can be prevented from interfering with the wrist when the wrist is bent inward or outward while the grip 11B is being gripped.

As illustrated in FIG. 3, the uppermost portion of the rear tracked section 31A is located at a higher position than the upper surface 11b of the operation section 11A and spaced rearward from the operation section 11A. That is, the uppermost portion of the rear tracked section 31A is located at a higher position than one of the operation members on the upper surface 11b that is located at the highest position (the operation stick 15 in the example illustrated in FIG. 3) and is spaced rearward from this operation member. A space for allowing the thumb to move in the front-rear direction is reserved between this operation member and the rear tracked section 31A.

### [Shape of Rear Tracked Section]

As illustrated in FIG. 6, the rear tracked section 31A has an arc shape in the rear view of the input device 100. In the rear view of the input device 100, the upper portion of the main body 10 is located on the inner side of the rear tracked section 31A. In the rear view of the input device 100, a left end 31i on the inner side of the rear tracked section 31A is located on the left side of the left side surface 11c of the grip 11B. A right end 31k on the inner side of the rear tracked section 31A is located on the right side of a right side surface 11g of the grip 11B. The user can grip the grip 11B in the hand placed on the inner side of the rear tracked section 31A. The plurality of light-emitting sections H are arranged in the circumferential direction of the rear tracked section 31A. The light-emitting sections H are distributed over the entire rear tracked section 31A as illustrated in FIG. 5.

As illustrated in FIG. 6, in the rear view of the input device 100, at least part of the outer shape of the rear tracked section 31A may be curved along a true circle Sp about a center line Pc extending in the front-rear direction. It is more desired that, in the rear view of the input device 100, the outer shape of the rear tracked section 31A be curved along the true circle Sp in a range equal to or larger than half of the outer shape of the rear tracked section 31A. Most of the outer shape of the rear tracked section 31A may be curved along the true circle Sp. In the example of the input device 100, the entire outer shape of the rear tracked section 31A forms part of the true circle Sp. The rear tracked section 31A is formed over 180 degrees in the circumferential direction about the center line Pc. With the rear tracked section 31A having the outer shape at least partially curved along the true circle Sp in this way, calculation processing for the position and posture of the input device 100 can be simplified. With the rear tracked section 31A having the outer shape entirely curved along the true circle Sp, the calculation processing can further be simplified.

In the plan view of the input device 100, the center line Pc (see FIG. 6) is parallel with the extending direction of the grip 11B (the direction indicated by a line P2 in FIG. 5). Further, in the side view of the input device 100, the center line Pc may be vertical to a center line Pv3 (see FIG. 4) of the operation stick 15. Unlike in the input device 100, the center line Pc may be inclined relative to the extending direction of the grip 11B (the direction indicated by the line P2 in FIG. 5) in plan view. Further, the center line Pc may be inclined relative to a plane vertical to the center line Pv3 (see FIG. 4) of the operation stick 15 in side view.

As illustrated in FIG. 6, distances between the plurality of light-emitting sections H provided on the rear tracked section 31A and the center line Pc are the same. In the example of the input device 100, the plurality of light-emitting sections H provided on a rear ramped surface 31b described later may have the same distance, which is denoted by L1, to the center line Pc. Further, the plurality of light-emitting sections H provided on a front ramped surface 31a described later may also have the same distance to the center line Pc.

As illustrated in FIG. 3, the rear tracked section 31A may extend straight in the up-down direction in the side view of the input device 100. With this, the shape of the rear tracked section 31A becomes simple, so that calculation processing for the position and posture of the input device 100 based on the positions of the light-emitting sections H can be simplified. The grip 11B extends obliquely downward and rearward from the operation section 11A. Accordingly, the rear tracked section 31A is inclined relative to the grip 11B in the side view of the input device 100.

Further, as illustrated in FIG. 5, the rear tracked section 31A may extend straight in the left-right direction in the plan view of the input device 100. With this, the shape of the rear tracked section 31A becomes simple, so that calculation processing of the position and posture of the input device 100 based on the positions of the light-emitting sections H can be simplified. In the plan view of the input device 100, the left portion of the rear tracked section 31A is located on the rear side of the operation section 11A and overlapped with none of the operation members.

When the input device 100 is being used, the rear tracked section 31A covers the upper side of the wrist of the user. The rear tracked section 31A is not easily covered by the body of the user, so that the detection stability of the camera mounted on the HMD 2 regarding the light-emitting sections H can be enhanced. Note that, the rear tracked section 31A may have, instead of the arc shape, a ring shape formed over 360 degrees in the circumferential direction about the center line Pc. Further, as still another example, the rear tracked section 31A may have a polygonal (for example, quadrilateral or pentagonal) shape or a polygonal shape formed in an arc in part.

The front tracked section 31B is connected to the upper portion of the rear tracked section 31A. The upper portion of the rear tracked section 31A is connected to the main body 10 through the front tracked section 31B. As illustrated in FIG. 5, the rear tracked section 31A includes a right section 31e that is located on the right side of a connection section 31d between the rear tracked section 31A and the front tracked section 31B and that extends downward and a left section 31f that is located on the left side of the connection section 31d and that extends downward. The sections 31e and 31f are curved in an arc about the center line Pc.

As illustrated in FIG. 2, the connection section 31d may be located at a higher position than a horizontal plane P1 passing through the center line Pc in the rear view of the input device 100. Further, the connection section 31d may be located on the right side of a vertical plane P2 passing through the center line Pc. That is, the connection section 31d may be located in a region that is higher than the horizontal plane P1 and that is on the right side of the vertical plane P2. With this, coupling between the main body 10 and the rear tracked section 31A through the front tracked section 31B that does not inhibit the movement of the thumb and the movement of the index finger can be achieved.

### [Ramped Surface of Rear Tracked Section]

As illustrated in FIG. 3, the exterior surface of the rear tracked section 31A includes the front ramped surface 31a and the rear ramped surface 31b. The rear ramped surface 31b is located on the rear side of the front ramped surface 31a. The two ramped surfaces 31a and 31b may be adjacent to each other in the front-rear direction. The ramped surfaces 31a and 31b may be connected to each other.

The front ramped surface 31a and the rear ramped surface 31b each extend in the circumferential direction about the center line Pc (see FIG. 6). The front ramped surface 31a and the rear ramped surface 31b are each entirely curved along the true circle Sp in the rear view of the input device 100. The boundary (ridge line N) between the two ramped surfaces 31a and 31b is also curved along the true circle Sp in a range larger than half of the ramped surfaces 31a and 31b.

As illustrated in FIG. 3, the front ramped surface 31a and the rear ramped surface 31b are each provided with the plurality of light-emitting sections H. On each of the front ramped surface 31a and the rear ramped surface 31b, the plurality of light-emitting sections H are arranged in the circumferential direction about the center line Pc. That is, the plurality of light-emitting sections H on the rear tracked section 31A are arranged in two lines.

As illustrated in FIG. 3, a direction in which the front ramped surface 31a faces (the direction of a normal D1) and a direction in which the rear ramped surface 31b faces (the direction of a normal D2) are different from each other. The normal D1 of the front ramped surface 31a is inclined forward relative to a direction orthogonal to the center line Pc (a plane Pv1 orthogonal to the center line Pc), and the normal D2 of the rear ramped surface 31b is inclined rearward relative to the direction orthogonal to the center line Pc. With this structure, the detection stability of the camera mounted on the HMD 2 regarding the light-emitting sections H can be more enhanced.

As illustrated in FIG. 5, a width Wb of the rear ramped surface 31b is larger than a width Wa of the front ramped surface 31a. When the user is using the input device 100, the rear ramped surface 31b faces the camera mounted on the head of the user more often than the front ramped surface 31a does. With the structure in which the width Wb of the rear ramped surface 31b is larger than the width Wa of the front ramped surface 31a, when the input device 100 is captured by the camera, the background of the light-emitting sections H arranged on the rear ramped surface 31b is larger than the background of the light-emitting sections H arranged on the front ramped surface 31a. As a result, the detection accuracy for the light-emitting sections H arranged on the rear ramped surface 31b can be enhanced.

The width Wb of the rear ramped surface 31b and the width Wa of the front ramped surface 31a of the input device 100 are constant in the circumferential direction about the center line Pc. Unlike this, the width Wb of the rear ramped surface 31b and the width Wa of the front ramped surface 31a may be varied depending on positions in the circumferential direction. Unlike in the input device 100, the width Wb of the rear ramped surface 31b and the width Wa of the front ramped surface 31a may be the same.

### [Position and Shape of Front Tracked Section]

As illustrated in FIG. 4, the front tracked section 31B is located on the front side of the rear tracked section 31A and extends in a direction different from that of the rear tracked section 31A. Specifically, in the side view of the input device 100, while the rear tracked section 31A extends in the up-down direction, the front tracked section 31B extends in the front-rear direction. Further, as illustrated in FIG. 5, in the plan view of the input device 100, while the rear tracked section 31A extends in the left-right direction, the front tracked section 31B extends obliquely in the front-rear direction. With the input device 100 including the tracked sections 31A and 31B extending in the two different directions in this way, the detection stability of the camera regarding the light-emitting sections H can be enhanced.

As illustrated in FIG. 3, the front tracked section 31B is located above the grip 11B. The front tracked section 31B extends from one of the upper portion of the rear tracked section 31A and the upper portion of the main body 10 (more specifically, the operation section 11A) to the other. With the front tracked section 31B placed in this way, the light-emitting sections H provided on the front tracked section 31B can be prevented from being covered by the body of the user. As illustrated in FIG. 2, the front tracked section 31B is connected to the upper portion of the main body 10 and the upper portion of the rear tracked section 31A.

As illustrated in FIG. 5, in the plan view of the input device 100, the front tracked section 31B is located on the right side of the upper portion of the main body 10 (operation section 11A) and extends in a direction extending from the upper portion of the main body 10 toward the rear tracked section 31A. More specifically, the front tracked section 31B extends obliquely rearward from the right side of the upper portion of the main body 10 (operation section 11A), to be connected to the rear tracked section 31A. The front tracked section 31B may extend obliquely rearward from the right side of the upper portion of the main body 10 in a curved or linear manner.

As illustrated in FIG. 2, when the user is gripping the grip 11B, the side portion of the palm is located under the front tracked section 31B. In the front view of the input device 100, under the front tracked section 31B, a space S1 surrounded by the main body 10 and the rear tracked section 31A is reserved. Part of the palm of the user gripping the grip 11B is placed in the space S1.

As illustrated in FIG. 2, in the front view of the input device 100, the main body 10 is shifted leftward relative to the plane P2 passing through the center in the left-right direction of the input device 100. With the main body 10 placed in this way, a sufficient space can be reserved as the space S1 for placing the palm of the right hand, to facilitate an operation with the main body 10 gripped by the right hand.

As illustrated in FIG. 4, a space for allowing the thumb to move is reserved above the front tracked section 31B. When the user spreads out the hand that has been gripping the grip 11B, the front tracked section 31B is located between the thumb and the base (proximal end) of the index finger of the user. Thus, the input device 100 can be prevented from dropping from the hand when the user spreads out the hand. That is, the front tracked section 31B may function as a hanger section that gets caught on the base of the index finger.

Further, as illustrated in FIG. 4, when the user spreads out the hand, the thumb is located between the upper portion of the rear tracked section 31A and the front tracked section 31B. Thus, the upper portion of the rear tracked section 31A and the front tracked section 31B prevent the input device 100 from getting out of the hand toward the front direction. That is, the rear tracked section 31A may function as a hanger section that gets caught on the thumb. The user can hold the HMD 2 to adjust the position of the HMD 2, for example, while hanging the input device 100 on his/her hand.

As illustrated in FIG. 5, the connection section 31d between the front tracked section 31B and the rear tracked section 31A is located on the right side of the operation section 11A and spaced rightward from the grip 11B in the plan view of the input device 100. The connection section 31d is located on the right side of the plane P2. In the plan view of the input device 100, a gap G1 is reserved between the right side surface of the grip 11B and the front tracked section 31B. With this, the connection section 31d and the front tracked section 31B can be prevented from interfering with the thumb of the user gripping the grip 11B.

As illustrated in FIG. 2, the front tracked section 31B is connected to the rear tracked section 31A at a position lower than the upper end of the rear tracked section 31A (the uppermost portion of the true circle Sp). The connection section 31d between the front tracked section 31B and the rear tracked section 31A may be located above or at the same height as the operation section 11A.

As illustrated in FIG. 2, in the front view of the input device 100, the space S1 surrounded by the front tracked section 31B, the main body 10, and the rear tracked section 31A is reserved. Part of the palm of the user is placed in the space S1. The space for allowing the thumb to move is reserved above the front portion of the front tracked section 31B and the operation section 11A. That is, the front tracked section 31B forms a partition between the space S1 in which the palm, the middle finger, and the like are placed and the space for allowing the thumb to move, in the front view of the input device 100.

As illustrated in FIG. 5, the front tracked section 31B has an upper surface 31g. The upper surface 31g is connected to the upper surface 11b of the operation section 11A. The user can retract the thumb to the upper surface 31g of the front tracked section 31B when operating none of the operation members 13, 14, and 15 provided on the upper surface 11a or 11b of the operation section 11A. In the example of the input device 100, the upper surface 11b of the operation section 11A is a horizontal surface. Unlike this, the upper surface 11b of the operation section 11A may be formed obliquely like the upper surface 31g of the front tracked section 31B, and the upper surfaces 11b and 31g may continuously extend rightward and upward. With this, the movement of the thumb for operating the operation member 14 or 15 can be smoothed.

### [Light-Emitting Section]

As illustrated in FIG. 4 and FIG. 5, the front tracked section 31B has a side surface (front surface) 31h and the upper surface 31g. The side surface 31h and the upper surface 31g may each be provided with one or a plurality of light-emitting sections H. With this structure, the detection stability of the camera regarding the light-emitting sections H can be enhanced.

The light-emitting sections H may be provided on the side surface 31h (FIG. 2) of the front tracked section 31B (hanger section), the front surface 11f (FIG. 2) of the operation section 11A, the left side surface 11c (FIG. 3) of the grip 11B, and the rear ramped surface 31b of the rear tracked section 31A (hanger section). The grip 11B has a relatively large width in the left-right direction, and hence, the left side surface 11c of the grip 11B is not covered by the fingers (specifically, the middle finger and the ring finger) even in a case where the user grips the grip 11B in his/her right hand.

The upper surface 31g (FIG. 5) of the front tracked section 31B, the upper surface 11b of the operation section 11A, and the front ramped surface 31a of the rear tracked section 31A are provided with the light-emitting sections H. The upper surfaces 11b and 11a of the operation section 11A and a rear surface 11e (see FIG. 5) of the grip 11B are not provided with the light-emitting sections H.

### [Second Example]

The input device proposed in the present disclosure is not limited to the input device 100 described above. Now, with reference to FIG. 7 and FIG. 8, an input device 300 is described as another example of the input device proposed in the present disclosure. In the following, differences between the input device 300 and the input device 100 are mainly described. Matters not described may be similar to those in the input device 100.

As illustrated in FIG. 7, a main body 310 of the input device 300 includes a grip 311B and an operation section 311A on which a plurality of operation members are placed. On the operation section 311A, for example, the operation buttons 13 and 14 and the operation stick 15 are placed as the operation members.

As illustrated in FIG. 7, the input device 300 includes a rear tracked section 331A and a front tracked section 331B. The rear tracked section 331A and the front tracked section 331B are each provided with the plurality of light-emitting sections H, and the exterior surfaces thereof form a tracked region.

As illustrated in FIG. 8, the rear tracked section 331A has a ring shape completely surrounding the center line Pc extending in the front-rear direction. With the rear tracked section 331A having this shape, restrictions on the posture of the input device 100 for achieving the detection stability of the light-emitting sections H can be relaxed. The rear tracked section 331A has the hexagonal shape surrounding the center line Pc in the rear view of the input device 300. The rear tracked section 331A may have a circular or rectangular shape.

As illustrated in FIG. 8, the front tracked section 331B is connected to an upper section 331e of the rear tracked section 331A. The rear tracked section 331A includes the upper section 331e, a right section 331f extending downward from the right side of the upper section 331e, a left section 331g extending downward from the left side of the upper section 331e, and a lower section 331h extending between the right section 331f and the left section 331g. Those four sections surround the center line Pc about the center line Pc.

As illustrated in FIG. 7, in the side view of the input device 300, the grip 311B is inclined forward relative to the rear tracked section 331A. The lower portion of the rear tracked section 331A is overlapped with the rear portion of the grip 311B. With such a positional relation, the rear tracked section 31A can be prevented from interfering with the wrist when the wrist is bent inward or outward while the grip 11B is being gripped. In the example of the input device 300, the lower portion of the rear tracked section 31A is overlapped with a rearmost portion 311d (see FIG. 7) of the grip 311B.

As illustrated in FIG. 8, the lower section 331h of the rear tracked section 331A is connected to the grip 311B. More specifically, the lower section 331h of the rear tracked section 331A is connected to the lower end (rear end) of the grip 311B. The upper section 331e of the rear tracked section 331A is connected to the main body 10 through the front tracked section 331B. With this, the lower section 331h and the upper section 331e of the rear tracked section 331A are supported, so that a sufficient rigidity of the rear tracked section 331A can be achieved. As a result, for example, it can be prevented that, when an unintentional external force acts on the rear tracked section 331A, the posture of the rear tracked section 331A, in other words, the positions of the light-emitting sections H provided on the rear tracked section 331A relative to the main body 10, are changed.

As illustrated in FIG. 7, the exterior surface of the rear tracked section 331A includes a front ramped surface 331a and a rear ramped surface 331b like the example of the input device 100. On each of the front ramped surface 331a and the rear ramped surface 331b, the plurality of light-emitting sections H are arranged in the extending direction of the front ramped surface 331a and the rear ramped surface 331b.

The rear tracked section 31A may have a rear ramped surface 31b and a front ramped surface 31a on each of the upper section 331e, the right section 331f, the left section 331g, and the lower section 331h. Then, the rear ramped surface 31b and the front ramped surface 31a on each section may be provided with the light-emitting sections H. Further, like the example of the input device 100, the width of the rear ramped surface 331b (Wb of FIG. 5) may be larger than the width of the front ramped surface 331a (Wa of FIG. 5).

As illustrated in FIG. 7, a left side surface 311c of the grip 311B may be provided with the plurality of light-emitting sections H. Further, a front surface 311f of the operation section 311A may also be provided with the plurality of light-emitting sections H. The other regions of the exterior surface of the main body 10, for example, the rear and front surfaces of the grip 11B, are not provided with the light-emitting sections H.

As illustrated in FIG. 8, under the front tracked section 331B, the space S1 surrounded by the main body 310 and the rear tracked section 331A is reserved. More specifically, the space S1 surrounded by the right section 331f and the lower section 331h of the rear tracked section 331A, the main body 310, the upper section 331e, and the front tracked section 331B is reserved. The main body 310 is shifted leftward relative to the plane P2 passing through the center in the left-right direction of the input device 300. With the main body 310 placed in this way, the space S1 can be increased to facilitate an operation with the main body 310 gripped by the right hand.

The front tracked section 331B extends rearward from the right side of the operation section 311A and is shifted rightward relative to the plane P2. With this, the front tracked section 331B can be prevented from hindering the movement of the thumb.

### [Third Example]

Now, with reference to FIG. 9 to FIG. 12, an input device 400 is described as still another example of the input device proposed in the present disclosure. In the following, differences between the input device 400 and the input device 100 are mainly described. Matters not described may be similar to those in the input device 100.

As illustrated in FIG. 10, a main body 410 of the input device 400 includes a grip 411B and an operation section 411A on which a plurality of operation members are placed. On the operation section 411A, for example, the operation buttons 13 and 14 and the operation stick 15 are placed as the operation members.

As illustrated in FIG. 9, the input device 400 includes a rear tracked section 431A and a front tracked section 431B. The rear tracked section 431A and the front tracked section 431B are each provided with the plurality of light-emitting sections H, and the exterior surfaces thereof form a tracked region.

As illustrated in FIG. 12, the rear tracked section 431A has a ring shape completely surrounding the center line Pc extending in the front-rear direction. That is, the rear tracked section 431A is formed over 360 degrees in the circumferential direction about the center line Pc.

As illustrated in FIG. 12, in the rear view of the input device 400, at least part of the outer shape of the rear tracked section 431A may be curved along the true circle Sp about the center line Pc extending in the front-rear direction. With the rear tracked section 431A having the outer shape at least partially curved along the true circle Sp in this way, calculation processing for the position and posture of the input device 400 can be simplified. Most of the outer shape of the rear tracked section 431A may desirably be curved along the true circle Sp. In the example of the input device 400, the entire rear tracked section 431A is curved along the true circle Sp. The plurality of light-emitting sections H provided on the rear tracked section 431A may have the same distance L1 (see FIG. 12) to the center line Pc.

Part of the rear tracked section 431A (for example, a connection section 431d between the rear tracked section 431A and the front tracked section 431B or a connection section between the rear tracked section 431A and the grip 411B) may be located on the outer side of the true circle Sp. Also in this case, the plurality of light-emitting sections H provided on the rear tracked section 431A may have the same distance L1 (see FIG. 12) to the center line Pc.

As illustrated in FIG. 10, the rear tracked section 431A may extend straight in the up-down direction in the side view of the input device 400. With this, the shape of the rear tracked section 431A becomes simple, so that calculation processing for the position and posture of the input device 400 based on the positions of the light-emitting sections H can be simplified. The rear tracked section 431A is inclined relative to the grip 411B in the side view of the input device 400.

Further, as illustrated in FIG. 11, the rear tracked section 431A may extend straight in the left-right direction in the plan view of the input device 400. With this, the shape of the rear tracked section 31A becomes simple, so that calculation processing for the position and posture of the input device 400 based on the positions of the light-emitting sections H can be simplified.

As illustrated in FIG. 10, the exterior surface of the rear tracked section 431A includes a front ramped surface 431a and a rear ramped surface 431b like the example of the input device 100. The front ramped surface 431a and the rear ramped surface 431b are each provided with the plurality of light-emitting sections H. The plurality of light-emitting sections H are arranged in the circumferential direction on the front ramped surface 431a and the rear ramped surface 431b.

As illustrated in FIG. 11, like the example of the input device 100, the width Wb of the rear ramped surface 431b may be larger than the width Wa of the front ramped surface 431a. The front ramped surface 431a and the rear ramped surface 431b are desirably formed along the entire circumference of the rear tracked section 431A. Unlike this, the front ramped surface 431a and the rear ramped surface 431b may be formed on only part of the rear tracked section 431A (for example, the upper portion of the rear tracked section 431A).

As illustrated in FIG. 10, a left side surface 411c of the grip 411B may be provided with the plurality of light-emitting sections H. Further, a front surface 411f of the operation section 411A may also be provided with the plurality of light-emitting sections H. The other regions of the exterior surface of the main body 10, for example, the rear and front surfaces of the grip 11B are not provided with the light-emitting sections H.

As illustrated in FIG. 10 and FIG. 11, the front tracked section 431B extends rearward and upward from the right side of the operation section 411A to be connected to the upper portion of the rear tracked section 431A. As illustrated in FIG. 10, the front tracked section 431B may extend rearward and upward in a curved manner.

The light-emitting sections H may be provided on the two surfaces of the front tracked section 431B. With this, the detection accuracy for the light-emitting sections H arranged on the front tracked section 431B can be enhanced as a result. In the example of the input device 400, the light-emitting sections H may be provided on an upper surface (front surface) 431h (see FIG. 11) and a right side surface 431i (see FIG. 11) of the front tracked section 431B.

The lower portion of the rear tracked section 431A is connected to the rearmost portion (lowest portion) of the grip 411B. Meanwhile, the upper portion of the rear tracked section 431A is connected to the main body 410 through the front tracked section 431B. With this, the lower and upper portions of the rear tracked section 431A are supported, so that a sufficient rigidity of the rear tracked section 431A can be achieved. As a result, for example, it can be prevented that, when an unintentional external force acts on the rear tracked section 431A, the posture of the rear tracked section 431A relative to the main body 10 is changed. Note that, in this description, the upper portion of the rear tracked section 431A is a portion above the horizontal plane P1 (see FIG. 9) passing through the center in the up-down direction of the rear tracked section 431A and the lower portion of the rear tracked section 31A is a portion under the horizontal plane P1.

The tracked region on the exterior surface of the input device 400 includes curved surfaces forming a single spherical surface Sr (same spherical surface) at at least two positions apart from each other. With this shape, calculation processing for the position and posture of the input device 100 based on the positions of the light-emitting sections H detected by the camera can be facilitated. The tracked sections 431A and 431B and the main body 410 are located on the inner side of the spherical surface Sr.

The input device 400 has such curved surfaces on the rear and front portions of the input device 400. Specifically, as illustrated in FIG. 10 and FIG. 11, the rear ramped surface 431b of the rear tracked section 31A is provided on the rear portion of the input device 400. The rear ramped surface 431b forms part of the virtual spherical surface Sr and is curved along the spherical surface Sr. The rear ramped surface 431b is located on the rear side of the operation members 13, 14, and 15, which are operated with the thumb, in the plan view of the input device 400. The rear ramped surface 431b has a ring shape surrounding the grip 411B in the rear view of the input device 400 (see FIG. 12). Unlike in the input device 400, the rear tracked section 431A may have an arc shape.

The rear ramped surface 431b is located on the rearmost portion of the input device 100. The rear ramped surface 431b placed in this way makes it easier for the camera mounted on the HMD 2 to capture light from the light-emitting sections H on the rear ramped surface 31b.

As illustrated in FIG. 10 and FIG. 11, the front surface 411f of the operation section 411A is provided on the front portion of the input device 400. The front surface 411f of the operation section 411A is a surface located on the front side of the operation members 13, 14, and 15. The front surface 411f of the operation section 411A forms part of the spherical surface Sr and is curved along the spherical surface Sr.

Instead of or together with the front surface 411f of the operation section 411A, the front surface (upper surface) 431h of the front tracked section 431B may form part of the spherical surface Sr.

As illustrated in FIG. 9, in the front view of the input device 400, the space S1 surrounded by the main body 410 and the rear tracked section 431A is reserved under the front tracked section 431B. The palm of the user is placed in the space S1. The main body 410 is shifted leftward relative to the plane P2 passing through the center in the left-right direction of the input device 400.

As illustrated in FIG. 11, the connection section 431d between the front tracked section 31B and the rear tracked section 31A is located on the right side of the plane P2. In the plan view of the input device 100, the front tracked section 431B is spaced rightward from the right side surface of the grip 411B. In the plan view of the input device 100, the gap G1 is reserved between the right side surface of the grip 411B and the front tracked section 431B. With this, the connection section 431d and the front tracked section 431B can be prevented from interfering with the thumb of the user gripping the grip 11B. The front tracked section 431B may extend obliquely rightward and rearward from the right side of the operation section 411A. With this, the gap G1 can be increased.

### [Fourth Example]

Now, with reference to FIG. 13 to FIG. 19, an input device 500 is described as yet another example of the input device proposed in the present disclosure. In the following, differences between the input device 500 and the input devices described so far (the input device 400 in particular) are mainly described. Matters not described may be similar to those in the input devices described so far.

As illustrated in FIG. 13, a main body 510 of the input device 500 includes a grip 511B and an operation section 511A on which a plurality of operation members are placed. On the operation section 511A, for example, the operation buttons 13 and 14 and the operation stick 15 are placed as the operation members. Further, operation buttons 16 and 17 may also be placed on the operation section 511A.

As illustrated in FIG. 13, the input device 500 includes a rear tracked section 531A and a front tracked section 531B. The rear tracked section 531A has a ring shape (see FIG. 16). The front tracked section 531B connects the upper portion of the main body 510 (specifically, the operation section 511B) and the rear tracked section 531A to each other.

### [Front Tracked Section]

The front tracked section 531B extends rightward from the upper portion of the main body 510 (operation section 511A) as illustrated in FIG. 17. The front tracked section 531B is located at a higher position than a center line Pc (see FIG. 16) of the rear tracked section 531A. Under the front tracked section 531B, the space S1 for placing the four fingers except for the thumb is reserved.

As illustrated in FIG. 17, in the front portion of the front tracked section 531B, an upper surface 531h of the front tracked section 531B is connected to an upper surface 511b of the operation section 511A without any step. With this, the user can smoothly move his/her finger on the upper surface of the operation section 511A.

As illustrated in FIG. 17, the upper surfaces 531h and 511b of the front portion of the front tracked section 531B and the operation section 511A may be substantially parallel with a horizontal plane P4. This also contributes to the smooth movement of the finger of the user. Here, the horizontal plane P4 is a plane vertical to the center line Pv3 of the operation stick 15, for example. The straight line Pv3 may also extend in the pressing direction of the operation buttons 13 and 14.

As illustrated in FIG. 14, in the rear portion of the front tracked section 531B, the upper surface 531h of the front tracked section 531B extends obliquely rearward and upward. With this, the width in the up-down direction of the front tracked section 531B is increased. As a result, the connection strength between the front tracked section 531B and the rear tracked section 531A is increased. Further, since the position of the upper surface 531h is relatively low in the front portion of the front tracked section 531B, a space large enough to allow the movement of the thumb with which the operation members placed on the operation section 511A are operated may be reserved between the operation section 511A (or the front portion of the front tracked section 531B) and the rear tracked section 531A.

As illustrated in FIG. 17, in the front portion of the front tracked section 531B, a lower surface 531j of the front tracked section 531B may also be substantially parallel with the horizontal plane P4. With this, when the user presses a trigger button 18 described later with his/her index finger, the user can smoothly move the index finger along the lower surface 531j of the rear tracked section 531A.

As illustrated in FIG. 14 and FIG. 17, in the rear portion of the front tracked section 531B, the lower surface 531j of the front tracked section 531B extends obliquely rearward and downward. With this, the width in the up-down direction of the front tracked section 531B is increased. As a result, the connection strength between the front tracked section 531B and the rear tracked section 531A is increased. Further, since the position of the lower surface 531j is relatively high in the front portion of the front tracked section 531B, a space large enough to allow the movement of the index finger with which the operation member placed on the front side of the operation section 511A (the trigger button 18 described later) is operated may be reserved under the front portion of the front tracked section 531B.

The lower portion of the rear tracked section 531A is connected to the rearmost portion (lowest portion) of the grip 511B. Further, as described above, the upper surface 531h of the front tracked section 531B extends obliquely rearward and upward, and the lower surface 531j of the front tracked section 531B extends obliquely rearward and downward. Thus, the size in the up-down direction of a connection section between the front tracked section 531B and the rear tracked section 531A is large. As a result, the rigidity of the rear tracked section 531A can be increased. Then, for example, it can be prevented that, when an unintentional external force acts on the rear tracked section 531A, the relative positions of the rear tracked section 531A and the front tracked section 531B (or the operation section 511A) are changed.

As illustrated in FIG. 14, the lower surface 531j of the front tracked section 531B is overlapped with the grip 511B in the side view of the input device 500. With this, when the input device 500 is being used, the back of the hand gripping the grip 511B faces the rear portion of the front tracked section 531B in the left-right direction. Hence, for example, the area of the rear portion of the front tracked section 531B that is brought into contact with the back of the hand when the user temporarily releases the grip 511B is increased. As a result, the relative postures of the input device 500 and the hand are easily maintained.

Note that the shape and placement of the front tracked section 531B are not limited to the example of the input device 500. The front tracked section 531B may extend obliquely rearward and upward from the operation section 511A. In this case, the upper surface 531h of the front tracked section 531B and the upper surface 511b of the operation section 511A may also be inclined.

### [Orientation of Rear Tracked Section]

As illustrated in FIG. 14 and FIG. 16, the rear tracked section 531A has the ring shape opening rearward. The rear tracked section 531A has the ring shape completely surrounding the center line Pc2. That is, the rear tracked section 531A is formed over 360 degrees in the circumferential direction about the center line Pc2.

In the example of the input device 500, the center line Pc2 is a line extending obliquely rearward. More specifically, the center line Pc2 is inclined relative to a vertical plane P5 in the plan view of the input device 500 as illustrated in FIG. 13. The vertical plane P5 may be a plane substantially extending along the grip 511B. Further, the vertical plane P5 may include the center line Pv3 of the operation stick 15. When the user is gripping the grip 511B, the center of the rear tracked section 531A is offset/located on the side on which the range of bending motion in the left-right direction of the wrist is wide relative to the grip 511B. That is, the area of the opening of the annular rear tracked section 531A is large on the side on which the range of motion of the wrist is large relative to the grip 511B. With the grip 511B and the rear tracked section 531A at those relative positions, the rear tracked section 531A can be prevented from interfering with the wrist or arm of the user when the user is gripping the grip 511B, so that comfortable operation may be achieved.

As illustrated in FIG. 13, the grip 511B is shifted leftward relative to the vertical plane P2 passing through the center in the left-right direction of the input device 500. The center line Pc2 of the rear tracked section 531A is a straight line extending obliquely rearward and rightward. In other words, when the user is gripping the grip 511B, the grip 511B is offset/located on the side on which the range of bending motion in the left-right direction of the wrist is narrow relative to the center of the input device 500 and the center of the rear tracked section 531A is offset/located on the side on which the range of bending motion in the left-right direction of the wrist is wide relative to the grip 511B. That is, the area of the opening of the annular rear tracked section 531A is larger on the side on which the range of motion of the wrist is large relative to the grip 511B. With the rear tracked section 531A inclined in this way, the rear tracked section 531A can be prevented from interfering with the wrist or arm of the user when the user is gripping the grip 511B in his/her right hand, so that comfortable operation may be achieved.

Unlike in the example illustrated in FIG. 13 to FIG. 18, the input device 500 may be for the left hand. In this case, the grip 511B is shifted rightward relative to the plane P2 passing through the center in the left-right direction of the input device 500. Meanwhile, the center line Pc2 of the rear tracked section 531A is a straight line extending obliquely rearward and leftward.

As illustrated in FIG. 14, the center line Pc2 of the rear tracked section 531A may be inclined relative to the horizontal plane P4. More specifically, the center line Pc2 may extend obliquely rearward and upward relative to the horizontal plane P4. In other words, when the user is gripping the grip 511B, the center of the rear tracked section 531A is offset/located on the side on which the range of bending motion in the up-down direction of the wrist is wide relative to the grip 511B. That is, the area of the annular opening is larger on the side on which the range of motion of the wrist is large relative to the grip 511B. Also with the rear tracked section 531A inclined in this way, the rear tracked section 531A can be prevented from interfering with the wrist or arm of the user when the user is gripping the grip 511B, so that comfortable operation may be achieved. Note that, the horizontal plane P4 may be a plane substantially orthogonal to the center line Pv3 of the operation stick 15.

Unlike in the input device 500, the rear tracked section 531A is not necessarily required to be formed over 360 degrees in the circumferential direction about the center line Pc2. For example, the rear tracked section 531A may be an arc shape only covering the upper side of the grip 511B in the rear view of the input device 500. Also in this case, the center line Pc2 of the rear tracked section 531A may be inclined relative to the horizontal plane P4 and/or the vertical plane P5 as in the input device 500.

### [Placement of Light-Emitting Section]

As illustrated in FIG. 17, a front surface 511f of the operation section 511A and a front surface (side surface) 531i of the front tracked section 531B are provided with the plurality of light-emitting sections H arranged in the left-right direction. In the example of the input device 500, the front surface 511f of the operation section 511A is provided with two light-emitting sections H and the front tracked section 531B is provided with a single light-emitting section H. The number of the light-emitting sections H provided on the front tracked section 531B may be two or more.

As illustrated in FIG. 17, the light-emitting sections H provided on the front surfaces 511f and 531i may be arranged along the horizontal plane P4. Unlike this, the arrangement direction of the light-emitting sections H may be inclined relative to the horizontal plane P4.

Further, the front tracked section 531B is not necessarily required to be provided with the light-emitting sections H. For example, in a case where the size in the left-right direction of the operation section 511A is large, while the front surface 511f of the operation section 511A may be provided with more light-emitting sections H, the front tracked section 531B is not necessarily required to be provided with the light-emitting sections H. In this case, although the front tracked section 531B does not function as a tracked section, the front tracked section 531B may function as a beam section for connecting the operation section 511A and the rear tracked section 531A to each other and achieving the strength of the rear tracked section 531A.

As illustrated in FIG. 13 and FIG. 15, the exterior surface of the rear tracked section 531A includes a front ramped surface 531a and a rear ramped surface 531b like the rear tracked section 431A of the input device 400. The front ramped surface 531a and the rear ramped surface 531b are each provided with the plurality of light-emitting sections H. The plurality of light-emitting sections H are arranged along the extending direction of the rear tracked section 531A (the circumferential direction about the center line Pc2). Like the rear tracked section 431A of the input device 400, the width of the rear ramped surface 531b (Wb of FIG. 5) may be larger than the width of the front ramped surface 531a (Wa of FIG. 5).

The positions of the light-emitting sections H provided on the front ramped surface 531a and the positions of the light-emitting sections H provided on the rear ramped section 531b may be shifted from each other in the extending direction of the rear tracked section 531A (the circumferential direction about the center line Pc2). With this, the distances between the light-emitting sections H are increased, so that the identification of the positions of the two adjacent light-emitting sections H can be facilitated. As a result, the accuracy of the detection of the position and posture of the input device 500 by the camera mounted on the HMD 2 (see FIG. 1) may be enhanced.

The tracked region on the exterior surface of the input device 500 includes curved surfaces forming the single spherical surface Sr (same spherical surface) on the front side of the operation members (the operation stick 15 and the like) and the rear side of the operation members (the operation stick 15 and the like). Specifically, as illustrated in FIG. 13 and FIG. 15, the rear ramped surface 531b located on the rear portion of the input device 500 forms part of the virtual spherical surface Sr and is curved along the spherical surface Sr. Further, as illustrated in FIG. 14, the front surface 511f of the operation section 511A also forms part of the spherical surface Sr and is curved along the spherical surface Sr. Moreover, as illustrated in FIG. 13, the front surface 531i of the front tracked section 531B also forms part of the spherical surface Sr. With this shape, calculation processing for the position and posture of the input device 500 based on the positions of the light-emitting sections H detected by the camera mounted on the HMD 2 can be facilitated.

In this way, the plurality of light-emitting sections H are provided on the rear ramped surface 531b of the rear tracked section 531A and the front surfaces 531i and 511f of the front tracked section 531B and the main body 510. Further, the surfaces 531b, 531i, and 511f are the curved surfaces forming part of the spherical surface **Sr.** Hence, the plurality of light-emitting sections H arranged on the rear ramped surface 531b and the plurality of light-emitting sections H arranged on the front surfaces 531i and 511f are located on the single virtual spherical surface **Sr.** With the light-emitting sections H arranged in this way, calculation processing for the position and posture of the input device 500 based on the positions of the light-emitting sections H detected by the camera mounted on the HMD 2 can be facilitated. Further, the grip 511B and the operation members are placed inside the virtual spherical surface Sr. Thus, when the user uses the input device by gripping the grip 511B, the light-emitting sections H are not covered by the hand of the user. Further, since the light-emitting sections H are located on the virtual spherical surface Sr inside which the hand of the user is placed, calculation processing for the position of the hand can be facilitated.

Note that, unlike in the input device 500, the rear ramped surface 531b of the rear tracked section 531A and one or both of the front surfaces 531i and 511f of the front tracked section 531B and the main body 510 are not necessarily required to be the curved surfaces. For example, the front surface 531i or 511f may be a plane extending obliquely upward and rearward. Further, the rear ramped surface 531b may be a plane extending obliquely rearward toward the center line Pc2. Also in this case, the plurality of light-emitting sections H on the front side of the operation members (the operation stick 15 and the like) and the plurality of light-emitting sections H on the rear side of the operation members may be located on the single spherical surface Sr. Specifically, the plurality of light-emitting sections H arranged on the rear ramped surface 531b and the plurality of light-emitting sections H arranged on the front surfaces 531h and 511f may be located on the single virtual spherical surface Sr. With this, calculation processing for the position and posture of the input device 500 based on the positions of the light-emitting sections H detected by the camera mounted on the HMD 2 can be facilitated.

As illustrated in FIG. 15, the front ramped surface 531a of the front tracked section 531B is a surface extending obliquely rearward toward the center line Pc2. As illustrated in FIG. 14, the front surface of the front tracked section 531B extends rearward in a curved manner to be connected to the rear ramped section 531b on the right portion of the rear tracked section 531A. Thus, the front ramped surface 531a is not formed on the right portion of the rear tracked section 531A.

In the input device 500, the regions other than the rear tracked section 531A and the front surfaces 531h and 511f of the front tracked section 531B and the main body 510 are not provided with the light-emitting sections H. Unlike in the input device 500, a left side surface 511c (see FIG. 15) of the grip 511B may also be provided with the light-emitting sections H, for example. Further, unlike in the input device 500, the light-emitting sections H may be provided on the upper surface 531h and the front surface (side surface) 531i of the front tracked section 531B. With this, the detection accuracy regarding the light-emitting sections H arranged on the front tracked section 531B can be more enhanced.

### [Operation Member]

As described above, the input device 500 includes the operation buttons 13, 14, 16, and 17 and the operation stick 15 as its operation members (see FIG. 13). The operation buttons 13 and 14 are buttons for selecting or operating game characters or objects, for example. Meanwhile, the operation button 16 is a function button for sharing gameplay and is a button for capturing the game screen of a game being played or capturing a still image from a moving image being reproduced and storing the captured image in the HMD 2 or a server apparatus connected to the HMD 2. The operation button 17 is a button for displaying various functions that the user can select, for example. For example, the user can operate the operation button 17 to select a game application that he/she is to play from a plurality of game applications in progress.

As illustrated in FIG. 13, the operation buttons 13 and 14 and the operation button 16 may be placed on the opposite sides across the operation stick 15. For example, the operation buttons 13 and 14 may be placed on the left side of the operation stick 15, and the operation button 16 may be placed on the right side of the operation stick 15. With this placement, the user can place his/her thumb at the initial position that is the operation stick 15 and smoothly move the thumb to the operation button 13, 14, or 16 from the operation stick 15 as needed.

The operation button 17 may be placed on the rear side of the operation stick 15. The operation buttons 13, 14, 16, and 17 provided on the upper surface 511b of the operation section 511A are buttons that are operated with the thumb. Those buttons are arranged in the circumferential direction about the operation stick 15. Hence, the user can place his/her thumb at the initial position that is the operation stick 15 and smoothly move the thumb to any of the operation buttons 13, 14, 16, and 17 from the operation stick 15 as needed.

As illustrated in FIG. 15, the trigger button 18 may be placed under the front surface 511f of the operation section 511A. The main body 510 may include a drive apparatus configured to move the trigger button 18. The drive apparatus generates, when the trigger button 18 is pressed, a reaction force to the movement of the trigger button 18, for example. The drive apparatus may include an electric motor as its drive source, for example.

As illustrated in FIG. 15, the main body 510 may include an operation button 19 on the grip 511B. The operation button 19 may be provided on the side surface of the grip 511B. The input device 500 may be a device for the right hand, and the operation button 19 may be provided on the left side surface 511c of the grip 511B, for example. With the operation button 19 placed in this way, the user can operate the operation button 19 with his/her middle finger.

One or a plurality of the operation buttons 13, 14, and 16 to 18 described so far may each have a touch sensing function of detecting the contact or proximity of the finger of the user to the button surface. Further, the operation stick 15 may also have a touch sensing function of detecting the contact or proximity of the finger of the user to the upper surface of the operation stick 15.

### [Conclusion]

As described above, in the input device 100, 300, 400, or 500, the main body 10, 110, 310, 410, or 510 includes the grip 11B, 311B, 411B, or 511B and at least one operation member 13, 14, 15, 16, 17, 18, or 19 that the user operates with his/her finger. The input device 100, 300, 400, or 500 includes the rear tracked section 31A, 331A, 431A, or 531A that is located on the rear side of at least one operation member and that forms part of the tracked region, and the front tracked section 31B, 331B, 431B, or 531A that is located on the front side of the rear tracked section and that extends in the direction different from that of the rear tracked section. In this way, the input device 100, 300, 400, or 500 includes the two tracked sections extending in the different directions, so that the detection stability of the camera mounted on the HMD 2 regarding the light-emitting sections H can be enhanced.

The front tracked section 31B, 331B, 431B, or 531B extends from one of the upper portion of the main body and the rear tracked section 31A, 331A, 431A, or 531A toward the other. With this, even in a case where the user releases the grip, the front tracked section 31B, 331B, 431B, or 531B gets caught on the hand, thus preventing the input device from dropping.

The front tracked section 31B, 331B, 431B, or 531B connects the upper portion of the main body 10, 110, 310, 410, or 510 and the rear tracked section 31A, 331A, 431A, or 531A to each other. With this, the rigidity of the input device can be increased, and it can be prevented that the relative positions of the rear tracked section 331A and the main body 10, 110, 310, 410, or 510 are changed.

The front tracked section 31B, 331B, 431B, or 531B has such a shape as to be located between the thumb and the edge portion of the palm of the user when the user spreads out the hand that has been gripping the grip.

In the plan view of the input device, the front tracked section 31B, 331B, 431B, or 531B is located on the right side of the upper portion of the main body 10, 110, 310, 410, or 510 and extends from the upper portion of the main body toward the rear tracked section 31A, 331A, 431A, or 531A.

In the plan view of the input device, the main body 10, 110, 310, 410, or 510 is shifted leftward relative to the plane P2 passing through the center in the left-right direction of the input device, and the front tracked section 31B, 331B, 431B, or 531A is shifted rightward relative to the plane P2. With this, an operation is easily made with the main body gripped by the right hand, and the front tracked section can be prevented from hindering the movement of the thumb.

The front tracked section 31B, 331B, 431B, or 531B extends rightward and rearward from the upper portion of the main body to be connected to the rear tracked section 31A, 331A, 431A, or 531A on the right side of the plane P2. With this structure, the space for allowing the finger to move can be reserved more easily.

In the plan view of the input device, the connection section between the front tracked section 31B, 331B, 431B, or 531B and the rear tracked section 31A, 331A, 431A, or 531A is spaced rightward from the grip. With this, the gap G1 is reserved between the right side surface of the grip and the front tracked section. With this, the connection section between the front tracked section and the rear tracked section and the front tracked section can be prevented from interfering with the thumb.

The main body 10, 110, 310, 410, or 510 is shifted leftward relative to the plane P2 passing through the center in the left-right direction of the input device in the plan view of the input device, and the front tracked section 31B, 331B, 431B, or 531B extends rightward from the upper portion of the main body 10, 110, 310, 410, or 510 in the front view of the input device.

The rear tracked section 31A, 431A, or 531A has the upper portion having the arc shape covering at least the upper side of the grip in the rear view of the input device. With this, the light-emitting sections H on the rear tracked section 31A, 431A, or 531A are not easily hidden from the camera mounted on the HMD 2, so that the detection accuracy for the posture and position of the input device can be enhanced.

The rear tracked section 331A, 431A, or 531A has the ring shape in the rear view of the input device. With this, for example, even in a case where the posture of the input device is reversed in the up-down direction, the detection accuracy for the posture and position of the input device can be enhanced.

The rear tracked section 531A has the ring shape surrounding the center line Pc2 extending obliquely rearward. With this, interference between the wrist of the user and the rear tracked section can be prevented. The rear tracked section 531A may have the arc shape covering the center line Pc2 extending obliquely rearward.

The rear tracked section 431A or 531A is substantially circular. With this, calculation processing for the position and posture of the input device based on the positions of the light-emitting sections H detected by the camera can be facilitated.

The rear tracked section 431A or 531A is connected to the lower portion of the grip. The connection section between the rear tracked section 431A or 531A and the grip rarely interferes with the use of the input device.

The rear tracked section 31A, 331A, 431A, or 531A is located on the rear side of the front portion of the grip in the side view of the input device.

The rear tracked section 531A has the ring shape surrounding the center line Pc2 extending obliquely rearward and upward in the side view of the input device. With this, interference between the wrist of the user and the rear tracked section can be prevented. The rear tracked section 531A may have the arc shape surrounding the center line Pc2.

The grip is shifted leftward relative to the center in the left-right direction of the input device. The rear tracked section 531A has the ring shape surrounding the center line Pc2 extending obliquely rearward and rightward in the plan view of the input device. With this, interference between the wrist of the user and the rear tracked section can be prevented. The rear tracked section 531A may have the arc shape surrounding the center line Pc2.

In the input device 400 or 500, the tracked region has the rear ramped surface 431b or 531b formed on the rear portion of the rear input device 400 or 500 and the front surface 411f, 511f, or 531i formed on the front portion of the input device 400 or 500. The rear ramped surface 431b or 531b and the front surface 411f, 511f, or 531i form part of the single spherical surface Sr. Calculation processing for the position and posture of the input device 400 or 500 based on the positions of the light-emitting sections H detected by the camera can be facilitated.

In the plan view of the input device 400 or 500, the rear ramped surface 431b or 531b is located on the rear side of at least one operation member (for example, the operation stick 15), and the front surface 411f, 511f, or 531i is located on the front side of at least one operation member (for example, the operation stick 15). With this, restrictions on the posture of the input device 400 or 500 for achieving the detection stability regarding the light-emitting sections H can be relaxed.

In the input device 400 or 500, the rear ramped surface 431b or 531b has the arc or ring shape covering at least the upper side of the grip 411B or 511B. The light-emitting sections H on the rear tracked section 431A or 531A are not easily hidden from the camera mounted on the HMD 2, so that the detection accuracy for the posture and position of the input device can be enhanced.

In the input device 400 or 500, the tracked region includes the rear ramped surface 431b or 531b on which the plurality of light-emitting sections H are arranged and the front surface 411f, 511f, or 531i on which the plurality of light-emitting sections H are arranged. The plurality of light-emitting sections H arranged on the rear ramped surface 431b or 531b and the plurality of light-emitting sections H arranged on the front surface 411f, 511f, or 531i are located on the single virtual spherical surface Sr. Calculation processing for the position and posture of the input device 400 or 500 based on the positions of the light-emitting sections H detected by the camera can be facilitated.

In the plan view of the input device 400 or 500, the plurality of light-emitting sections H arranged on the rear ramped surface 431b or 531b are located on the rear side of at least one operation member (for example, the operation stick 15), and the plurality of light-emitting sections H arranged on the front surface 411f, 511f, or 531i are located on the front side of at least one operation member (for example, the operation stick 15). With this, restrictions on the posture of the input device 400 or 500 for achieving the detection stability regarding the light-emitting sections H can be relaxed.

In the input device 400 or 500, at least one of the plurality of light-emitting sections H arranged on the rear ramped surface 431b or 531b is provided on the surface facing in the rear and upper directions of the input device. Further, the front surface 411f, 511f, or 531i on which the plurality of light-emitting sections H are provided faces in the front direction of the input device 400 or 500. With this, restrictions on the posture of the input device 400 or 500 for achieving the detection stability regarding the light-emitting sections H can be relaxed.

The input device 100, 300, 400, or 500 includes the main body 10, 110, 310, 410, or 510 including the grip and at least one operation member (for example, the operation stick 15) that the user operates with his/her finger. Further, the input device 100, 300, 400, or 500 includes the rear tracked section 31A, 331A, 431A, or 531A that is located on the rear side of at least one operation member and that covers at least the upper side of the grip in rear view. Further, the input device 100, 300, 400, or 500 includes the beam section for connecting the upper portion of the main body 10, 110, 310, 410, or 510 and the rear tracked section 31A, 331A, 431A, or 531A to each other (the front tracked section 31B, 331B, 431B, or 531B corresponds to the "beam section" in the input devices described above). It can be prevented that the relative positions of the rear tracked section and the main body 10, 110, 310, 410, or 510, that is, the light-emitting sections H provided on the rear tracked section and the light-emitting sections H provided on the main body, are changed, so that the calculation accuracy for the position and posture of the input device can be enhanced.

Note that, in the example of the input device 100, 300, 400, or 500, the front tracked section 31B, 331B, 431B, or 531B is not necessarily required to be connected to both the main body 10, 110, 310, 410, or 510 and the rear tracked section 31A, 331A, 431A, or 531A. That is, the front tracked section 31B, 331B, 431B, or 531B may be connected to only one of the main body 10, 110, 310, 410, or 510 and the rear tracked section 31A, 331A, 431A, or 531A. Also in this case, when the user spreads out the hand that has been gripping the grip 11B, the front tracked section 31B is located between the thumb and the base (proximal end) of the index finger of the user. With this, the input device 100 can be prevented from dropping from the hand when the user spreads out the hand.

### [Fifth Example]

FIG. 19 to FIG. 23 are diagrams illustrating yet another example of the input device proposed in the present disclosure. Now, an input device 200 for the right hand is described in detail. The outer shape of the input device 200 for the right hand and the outer shape of the input device 200 for the left hand are symmetrical. The number and kinds of operation members that are placed on an operation section 211A described later may be different between the left and right input devices 200. Further, the operation members may be placed asymmetrically between the input device 200 for the right hand and the input device 200 for the left hand.

As illustrated in FIG. 19, the input device 200 includes a main body 210 including a grip 211B and the operation section 211A on which the plurality of operation members are placed. The main body 210 includes the operation section 211A on its upper portion, and the grip 211B is formed under the operation section 211A. The operation members placed on the operation section 211A can be operated with the thumb or the index finger with the grip 211B gripped. As the operation members, for example, operation buttons 213 and 214 and an operation stick 215 are placed on the operation section 211A. The operation button 213 is placed on a front surface 211a of the operation section 211A and operated with the index finger, for example. The operation buttons 214 and the operation stick 215 are placed on the upper surface of the operation section 211A and operated with the thumb, for example. In the input device 200, a plurality of operation buttons 216 are placed on the grip 211B.

As illustrated in FIG. 22, the input device 200 includes a tracked region in which the plurality of light-emitting sections H are arranged. The tracked region includes the exterior surface of a rear curved section 231A and the exterior surface of a front coupling section 231B (see FIG. 23).

As illustrated in FIG. 22, the rear curved section 231A includes an inner wall section 231a and an outer wall section 231c. The inner wall section 231a extends rearward from the main body 210. The outer wall section 231c is spaced rightward from the inner wall section 231a. The user can grip the grip 211B in the right hand placed between the inner wall section 231a and the outer wall section 231c. When the user is gripping the grip 211B, the inner wall section 231a is located on the inner side of the hand, and the outer wall section 231c is located on the outer side of the hand. A rear coupling section 231b is located on the rear side of the inner wall section 231a and the outer wall section 231c and connects the upper portions of the inner wall section 231a and the outer wall section 231c. The lower portion of the inner wall section 231a and the lower portion of the outer wall section 231c are not connected to each other. Thus, the rear curved section 231A has a substantially U shape opening downward in the rear view of the input device 200. When the input device 200 is being used, the rear curved section 231A covers the upper side of the wrist of the user.

As illustrated in FIG. 22, the plurality of light-emitting sections H are arranged on each of the inner wall section 231a, the outer wall section 231c, and the rear coupling section 231b. With the rear curved section 231A having this shape, the light-emitting sections H provided on the rear curved section 231A are not easily covered by the body of the user, so that the detection stability of the camera mounted on the HMD 2 regarding the light-emitting sections H can be enhanced.

As illustrated in FIG. 22, the front coupling section 231B is located on the front side of the rear curved section 231A. In the plan view of the input device 100, the rear coupling section 231b extends over the upper side of the wrist of the user in the left-right direction. The outer wall section 231c extends forward from the rear coupling section 231b in a curved manner. The front coupling section 231B is further curved to extend obliquely forward and leftward. In the example of the input device 100, the inner wall section 231a, the outer wall section 231c, the rear coupling section 231b, and the front coupling section 231B extend in the directions different from each other and each have an elliptical shape elongated in the front-rear direction in plan view.

As illustrated in FIG. 23, the front coupling section 231B is located between the upper portion of the outer wall section 231c and the upper portion of the main body 210 (operation section 211A) and connects the upper portions to each other. As illustrated in FIG. 21, the front coupling section 231B is located on the right side of the upper portion of the main body 210 (see FIG. 23) and extends rearward from the upper portion of the main body 210 in a curved manner, thereby being connected to the upper portion of the outer wall section 231c. With the front coupling section 231B placed in this way, when the user spreads out the hand that has been gripping the grip 211B, the front coupling section 231B is located between the thumb and the base (proximal end) of the index finger of the user. Thus, the input device 100 can be prevented from dropping from the hand when the user spreads out the hand.

As illustrated in FIG. 22, the main body 210 is shifted leftward relative to a plane P3 passing through the center in the left-right direction of the input device 200. Meanwhile, the front coupling section 231B is shifted rightward relative to the plane P3. With this placement, an operation is easily made with the main body 210 gripped by the right hand.

## Claims

1. A system including a head-mounted display (2) and an input device (100, 200, 300, 400, 500), the head-mounted display (2) including a camera facing forward when the head-mounted display (2) is worn by a user in a predetermined manner, and the input device (100, 200, 300, 400, 500) comprising:
a main body (10, 110, 410, 510) including a grip (11B, 211B, 311B, 411B, 511B) and at least one operation member (13, 14, 15, 16, 17, 215, 216) that the user operates with his/her finger;
a rear section (31A, 231A, 331A, 431A, 531A) that is located on a rear side of the at least one operation member (13, 14, 15, 16, 17, 215, 216) and that covers at least an upper side of the grip (11B, 211B, 311B, 411B, 511B) in a rear view as seen by
the camera of the head-mounted display (2) when the user holds the grip (11B, 211B, 311B, 411B, 511B) of the main body (10, 110, 410, 510) in a manner predetermined for using the input device (100, 200, 300, 400, 500);
a beam section for connecting an upper portion of the main body (10, 110, 410, 510) and the rear section (31A, 331A, 431A, 531A) to each other;
a tracked region in which a plurality of light-emitting sections (H) are arranged;
a first section that is provided on the rear section (31A, 231A, 331A, 431A, 531A) and that forms part of the tracked region (31A, 31B; 231A, 231B; 331A, 331B; 431A, 431B; 531A, 531B); and
a second section that is located on a front side of the first section, that extends in a direction different from that of the first section, and that forms another part of the tracked region (31A, 31B; 231A, 231B; 331A, 331B; 431A, 431B; 531A, 531B), wherein at least part of the second section is provided on the main body (10, 110, 410, 510).

2. The system according to claim 1, wherein the second section of the input device (100, 300, 400, 500) extends from one of an upper portion of the main body (10, 110, 410, 510) and the first section toward another of the upper portion of the main body (10, 110, 410, 510) and the first section.

3. The system according to claim 1, wherein the second section of the input device (100, 300, 400, 500) connects an upper portion of the main body (10, 110, 410, 510) and the first section to each other.

4. The system according to claim 1, wherein the second section of the input device (100, 110, 410, 510) has such a shape as to be located between a thumb and an edge portion of a palm of the user when the user spreads out a hand that has been gripping the grip (11B, 311B, 411B, 511B).

5. The system according to claim 1,
wherein, in a plan view of the input device (100), the second section of the input device (100, 300, 400, 500) is located on a right or left side of an upper portion of the main body (10, 110, 410, 510), and
the second section extends from the upper portion of the main body (10, 110, 410, 510) toward the first section.

6. The system according to claim 1, wherein, in a plan view of the input device (100, 300, 400, 500), the main body (10, 110, 410, 510) of the input device (100, 300, 400, 500) is shifted toward a first side relative to a plane (P2) passing through a center in a left-right direction of the input device (100, 300, 400, 500), and the second section is shifted toward a second side relative to the plane (P2) passing through the center in the left-right direction of the input device (100 300 400, 500), the second side being an opposite side of the first side.

7. The system according to claim 6, wherein the second section of the input device (100, 110, 410, 510) extends rearward from an upper portion of the main body (10, 110, 410, 510) toward the second side, to be connected to the first section on the second side of the plane (P2).

8. The system according to claim 2,
wherein the second section of the input device (100) is connected to the first section, and
a connection section (31d) between the second section and the first section is spaced rightward or leftward from the grip (11B) in a plan view of the input device.

9. The system according to claim 6, wherein the second section of the input device (100) extends from an upper portion of the main body (10) toward the second side in a front view of the input device (100).

10. The system according to claim 1, wherein the first section of the input device (100) extends in a direction in which the first section intersects with the grip (11B), in a side view of the input device (100).

11. The system according to claim 1, wherein the first section of the input device (100) has an upper portion having an arc shape covering at least an upper side of the grip (31B), in the rear view of the input device (100).

12. The system according to claim 11, wherein the first section of the input device (100) has a ring shape in the rear view of the input device (100).

13. The system according to claim 1, wherein the first section of the input device (100, 300, 400, 500) has a ring or arc shape surrounding or covering a center line (Pc2) of the first section extending obliquely rearward.

14. The system according to claim 12, wherein the first section of the input device (100) is substantially circular.

15. The system according to claim 1, wherein the first section of the input device (100) is connected to a lower portion of the grip (11B).

16. The system according to claim 1, wherein the first section of the input device (100) is located on a rear side of a front portion of the grip (11B) in a side view of the input device (100).

17. The system according to claim 1, wherein the first section of the input device (100) has a ring or arc shape surrounding or covering a center line (Pc2) of the first section extending obliquely rearward and upward in a side view of the input device (100).

18. The system according to claim 1,
wherein the grip (11B) of the input device (100) is shifted in one of right and left directions relative to a center in a left-right direction of the first section, and
the first section has a ring or arc shape surrounding or covering a center line (Pc2) of the first section extending obliquely rearward in another of the right and left directions, in a plan view of the input device.

## Patentansprüche

1. System, einschließlich einer am Kopf montierten Anzeige (2) und einer Eingabevorrichtung (100, 200, 300, 400, 500), die am Kopf montierte Anzeige (2) einschließlich einer Kamera, die nach vorne gerichtet ist, wenn die am Kopf montierte Anzeige (2) durch einen Benutzer in einer zuvor bestimmten Weise getragen wird, und die Eingabevorrichtung (100, 200, 300, 400, 500) umfassend:
einen Hauptkörper (10, 110, 410, 510), einschließlich eines Griffs (11B, 211B, 311B, 411B, 511B) und mindestens eines Bedienelements (13, 14, 15, 16, 17, 215, 216), das der Benutzer mit seinem/ihrem Finger bedient;
einen hinteren Bereich (31A, 231A, 331A, 431A, 531A), der sich auf einer Hinterseite des mindestens einen Bedienelements (13, 14, 15, 16, 17, 215, 216) befindet und der mindestens eine Oberseite des Griffs (11B, 211B, 311B, 411B, 511B) in einer hinteren Sicht, wie durch die Kamera der am Kopf montierten Anzeige (2) gesehen, abdeckt, wenn der Benutzer den Griff (11B, 211B, 311B, 411B, 511B) des Hauptkörpers (10, 110, 410, 510) in einer Weise, die zum Verwenden der Eingabevorrichtung (100, 200, 300, 400, 500) zuvor bestimmt ist, hält;
einen Trägerbereich zum Verbinden eines oberen Abschnitts des Hauptkörpers (10, 110, 410, 510) und des hinteren Bereichs (31A, 331A, 431A, 531A) miteinander;
eine verfolgte Region, in der eine Vielzahl von lichtemittierenden Bereichen (H) angeordnet sind;
einen ersten Bereich, der auf dem hinteren Bereich (31A, 231A, 331A, 431A, 531A) bereitgestellt ist und der einen Teil der verfolgten Region (31A, 31B; 231A, 231B; 331A, 331B; 431A, 431B; 531A, 531B) ausbildet; und
einen zweiten Bereich, der sich auf einer Vorderseite des ersten Bereichs befindet, der sich in eine andere Richtung als die des ersten Bereichs erstreckt und der einen anderen Teil der verfolgten Region (31A, 31B; 231A, 231B; 331A, 331B; 431A, 431B; 531A, 531B) ausbildet, wobei
mindestens ein Teil des zweiten Bereichs auf dem Hauptkörper (10, 110, 410, 510) bereitgestellt ist.

2. System nach Anspruch 1, wobei sich der zweite Bereich der Eingabevorrichtung (100, 300, 400, 500) von einem eines oberen Abschnitts des Hauptkörpers (10, 110, 410, 510) und dem ersten Bereich zu einem anderen des oberen Abschnitts des Hauptkörpers (10, 110, 410, 510) und dem ersten Bereich erstreckt.

3. System nach Anspruch 1, wobei der zweite Bereich der Eingabevorrichtung (100, 300, 400, 500) einen oberen Abschnitt des Hauptkörpers (10, 110, 410, 510) und den ersten Bereich miteinander verbindet.

4. System nach Anspruch 1, wobei der zweite Bereich der Eingabevorrichtung (100, 110, 410, 510) eine derartige Form aufweist, dass er sich zwischen einem Daumen und einem Randabschnitt einer Handfläche des Benutzers befindet, wenn der Benutzer eine Hand, die den Griff (11B, 311B, 411B, 511B) gegriffen hatte, ausbreitet.

5. System nach Anspruch 1,
wobei sich, in einer Draufsicht der Eingabevorrichtung (100), der zweite Bereich der Eingabevorrichtung (100, 300, 400, 500) auf einer rechten oder linken Seite eines oberen Abschnitts des Hauptkörpers (10, 110, 410, 510) befindet, und
sich der zweite Bereich von dem oberen Abschnitt des Hauptkörpers (10, 110, 410, 510) zu dem ersten Bereich erstreckt.

6. System nach Anspruch 1, wobei, in einer Draufsicht der Eingabevorrichtung (100, 300, 400, 500), der Hauptkörper (10, 110, 410, 510) der Eingabevorrichtung (100, 300, 400, 500) zu einer ersten Seite relativ zu einer Ebene (P2), die durch ein Zentrum in einer Links-Rechts-Richtung der Eingabevorrichtung (100, 300, 400, 500) verläuft, verschoben ist und der zweite Bereich zu einer zweiten Seite relativ zu der Ebene (P2), die durch das Zentrum in der Links-Rechts-Richtung der Eingabevorrichtung (100, 300, 400, 500) verläuft, verschoben ist, wobei die zweite Seite eine gegenüberliegende Seite der ersten Seite ist.

7. System nach Anspruch 6, wobei sich der zweite Bereich der Eingabevorrichtung (100, 110, 410, 510) von einem oberen Abschnitt des Hauptkörpers (10, 110, 410, 510) zu der zweiten Seite nach hinten erstreckt, um mit dem ersten Bereich auf der zweiten Seite der Ebene (P2) verbunden zu sein.

8. System nach Anspruch 2,
wobei der zweite Bereich der Eingabevorrichtung (100) mit dem ersten Bereich verbunden ist, und
ein Verbindungsbereich (31d) zwischen dem zweiten Bereich und dem ersten Bereich in einer Draufsicht der Eingabevorrichtung nach rechts oder nach links von dem Griff (11B) beabstandet ist.

9. System nach Anspruch 6, wobei sich der zweite Bereich der Eingabevorrichtung (100) von einem oberen Abschnitt des Hauptkörpers (10) zu der zweiten Seite in einer Vordersicht der Eingabevorrichtung (100) erstreckt.

10. System nach Anspruch 1, wobei sich der erste Bereich der Eingabevorrichtung (100) in eine Richtung, in der der erste Bereich den Griff (11B), in einer Seitensicht der Eingabevorrichtung (100), schneidet, erstreckt.

11. System nach Anspruch 1, wobei der erste Bereich der Eingabevorrichtung (100) einen oberen Abschnitt aufweist, der eine Bogenform aufweist, die mindestens eine Oberseite des Griffs (31B) in der hinteren Sicht der Eingabevorrichtung (100) abdeckt.

12. System nach Anspruch 11, wobei der erste Bereich der Eingabevorrichtung (100) eine Ringform in der hinteren Sicht der Eingabevorrichtung (100) aufweist.

13. System nach Anspruch 1, wobei der erste Bereich der Eingabevorrichtung (100, 300, 400, 500) eine Ring- oder Bogenform aufweist, die eine Zentrumslinie (Pc2) des ersten Bereichs, die sich schräg nach hinten erstreckt, umgibt oder abdeckt.

14. System nach Anspruch 12, wobei der erste Bereich der Eingabevorrichtung (100) im Wesentlichen kreisförmig ist.

15. System nach Anspruch 1, wobei der erste Bereich der Eingabevorrichtung (100) mit einem unteren Abschnitt des Griffs (11B) verbunden ist.

16. System nach Anspruch 1, wobei sich der erste Bereich der Eingabevorrichtung (100) auf einer Hinterseite eines vorderen Abschnitts des Griffs (11B) in einer Seitensicht der Eingabevorrichtung (100) befindet.

17. System nach Anspruch 1, wobei der erste Bereich der Eingabevorrichtung (100) eine Ring- oder Bogenform aufweist, die eine Zentrumslinie (Pc2) des ersten Bereichs, die sich schräg nach hinten und nach oben in einer Seitensicht der Eingabevorrichtung (100) erstreckt, umgibt oder abdeckt.

18. System nach Anspruch 1,
wobei der Griff (11B) der Eingabevorrichtung (100) in eine von einer rechten und linken Richtung relativ zu einem Zentrum in einer Links-Rechts-Richtung des ersten Bereichs verschoben ist und
der erste Bereich eine Ring- oder Bogenform aufweist, die eine Zentrumslinie (Pc2) des ersten Bereichs, die sich schräg nach hinten, in einer Draufsicht der Eingabevorrichtung, in eine andere der rechten und linken Richtung erstreckt, umgibt oder abdeckt.

## Revendications

1. Système comportant un visiocasque (2) et un dispositif d'entrée (100, 200, 300, 400, 500), le visiocasque (2) comportant une caméra tournée vers l'avant lorsque le visiocasque (2) est porté par un utilisateur d'une manière prédéterminée, et le dispositif d'entrée (100, 200, 300, 400, 500) comprenant :
un corps principal (10, 110, 410, 510) comportant une poignée (11B, 211B, 311B, 411B, 511B) et au moins un élément d'actionnement (13, 14, 15, 16, 17, 215, 216) que l'utilisateur actionne avec son doigt ;
une section arrière (31A, 231A, 331A, 431A, 531A) qui est située sur un côté arrière de l'au moins un élément d'actionnement (13, 14, 15, 16, 17, 215, 216) et qui couvre au moins un côté supérieur de la poignée (11B, 211B, 311B, 411B, 511B) dans une vue arrière telle que vue par la caméra du visiocasque (2) lorsque l'utilisateur tient la poignée (11B, 211B, 311B, 411B, 511B) du corps principal (10, 110, 410, 510) d'une manière prédéterminée pour l'utilisation du dispositif d'entrée (100, 200, 300, 400, 500) ;
une section de poutre pour relier une partie supérieure du corps principal (10, 110, 410, 510) et la section arrière (31A, 331A, 431A, 531A) l'une à l'autre ;
une région suivie dans laquelle une pluralité de sections électroluminescentes (H) sont agencées ;
une première section qui est prévue sur la section arrière (31A, 231A, 331A, 431A, 531A) et qui fait partie de la région suivie (31A, 31B ; 231A, 231B ; 331A, 331B ; 431A, 431B ; 531A, 531B) ; et
une seconde section qui est située sur un côté avant de la première section, qui s'étend dans une direction différente de celle de la première section, et qui forme une autre partie de la région suivie (31A, 31B ; 231A, 231B ; 331A, 331B ; 431A, 431B ; 531A, 531B), dans lequel
au moins une partie de la seconde section est prévue sur le corps principal (10, 110, 410, 510).

2. Système selon la revendication 1, dans lequel la seconde section du dispositif d'entrée (100, 300, 400, 500) s'étend d'une partie supérieure du corps principal (10, 110, 410, 510) et de la première section vers une autre de la partie supérieure du corps principal (10, 110, 410, 510) et de la première section.

3. Système selon la revendication 1, dans lequel la seconde section du dispositif d'entrée (100, 300, 400, 500) relie une partie supérieure du corps principal (10, 110, 410, 510) et la première section l'une à l'autre.

4. Système selon la revendication 1, dans lequel la seconde section du dispositif d'entrée (100, 110, 410, 510) présente une forme telle qu'elle se situe entre un pouce et une partie de bord d'une paume de l'utilisateur lorsque l'utilisateur déploie une main qui a saisi la poignée (11B, 311B, 411B, 511B).

5. Système selon la revendication 1,
dans lequel, dans une vue en plan du dispositif d'entrée (100), la seconde section du dispositif d'entrée (100, 300, 400, 500) est située sur un côté droit ou gauche d'une partie supérieure du corps principal (10, 110, 410, 510), et
la seconde section s'étend de la partie supérieure du corps principal (10, 110, 410, 510) vers la première section.

6. Système selon la revendication 1, dans lequel, dans une vue en plan du dispositif d'entrée (100, 300, 400, 500), le corps principal (10, 110, 410, 510) du dispositif d'entrée (100, 300, 400, 500) est décalé vers un premier côté par rapport à un plan (P2) passant par un centre dans une direction gauche-droite du dispositif d'entrée (100, 300, 400, 500), et la seconde section est décalée vers un second côté par rapport au plan (P2) passant par le centre dans la direction gauche-droite du dispositif d'entrée (100, 300, 400, 500), le second côté étant un côté opposé au premier côté.

7. Système selon la revendication 6, dans lequel la seconde section du dispositif d'entrée (100, 110, 410, 510) s'étend vers l'arrière à partir d'une partie supérieure du corps principal (10, 110, 410, 510) vers le second côté, pour être reliée à la première section sur le second côté du plan (P2).

8. Système selon la revendication 2,
dans lequel la seconde section du dispositif d'entrée (100) est reliée à la première section, et
une section de liaison (31d) entre la seconde section et la première section est espacée vers la droite ou vers la gauche de la poignée (11B) dans une vue en plan du dispositif d'entrée.

9. Système selon la revendication 6, dans lequel la seconde section du dispositif d'entrée (100) s'étend d'une partie supérieure du corps principal (10) vers le second côté dans une vue avant du dispositif d'entrée (100).

10. Système selon la revendication 1, dans lequel la première section du dispositif d'entrée (100) s'étend dans une direction dans laquelle la première section croise la poignée (11B), dans une vue latérale du dispositif d'entrée (100).

11. Système selon la revendication 1, dans lequel la première section du dispositif d'entrée (100) présente une partie supérieure dont une forme d'arc couvre au moins un côté supérieur de la poignée (31B), dans la vue arrière du dispositif d'entrée (100).

12. Système selon la revendication 11, dans lequel la première section du dispositif d'entrée (100) présente une forme d'anneau dans la vue arrière du dispositif d'entrée (100).

13. Système selon la revendication 1, dans lequel la première section du dispositif d'entrée (100, 300, 400, 500) présente une forme d'anneau ou d'arc entourant ou couvrant une ligne médiane (Pc2) de la première section s'étendant obliquement vers l'arrière.

14. Système selon la revendication 12, dans lequel la première section du dispositif d'entrée (100) est sensiblement circulaire.

15. Système selon la revendication 1, dans lequel la première section du dispositif d'entrée (100) est reliée à une partie inférieure de la poignée (11B).

16. Système selon la revendication 1, dans lequel la première section du dispositif d'entrée (100) est située sur un côté arrière d'une partie avant de la poignée (11B) dans une vue latérale du dispositif d'entrée (100).

17. Système selon la revendication 1, dans lequel la première section du dispositif d'entrée (100) présente une forme d'anneau ou d'arc entourant ou couvrant une ligne médiane (Pc2) de la première section s'étendant obliquement vers l'arrière et vers le haut dans une vue latérale du dispositif d'entrée (100).

18. Système selon la revendication 1,
dans lequel la poignée (11B) du dispositif d'entrée (100) est décalée dans l'une parmi une direction droite et une direction gauche par rapport à un centre dans une direction gauche-droite de la première section, et
la première section présente une forme d'anneau ou d'arc entourant ou couvrant une ligne médiane (Pc2) de la première section s'étendant obliquement vers l'arrière dans une autre des directions droite et gauche, dans une vue en plan du dispositif d'entrée.
